# EUROPEAN PATENT APPLICATION

(11) **EP 4 848 858 A1**
(43) Date of publication of application: **02.12.2026**
(21) Application number: 25751008.1
(22) Date of filing: 02.01.2025
(51) Int. Cl.: H04W 72/0453

(54) **CONFIGURATION METHOD AND APPARATUS**

(30) Priority: 07.02.2024 CN 202410176995
(71) Applicant: Huawei Technologies Co., Ltd., Shenzhen, Guangdong 518129 (CN)
(72) Inventor: JIAO, Shurong, Shenzhen, Guangdong 518129 (CN); HUA, Meng, Shenzhen, Guangdong 518129 (CN); LI, Jun, Shenzhen, Guangdong 518129 (CN)
(74) Representative: Huawei European IPR
(86) International application number: PCT/CN2025/070262
(87) International publication number: WO 2025/167406

(57) **Abstract**

This application provides a configuration method and an apparatus, and relates to the field of communication technologies. In the method, a terminal sends, to a RAN node, carrier aggregation capability information indicating that the terminal supports joint data transmission on N1 first carriers, receives carrier aggregation configuration information used to configure a first frequency domain resource, and communicates with the RAN node on the first frequency domain resource. The carrier aggregation configuration information is determined based on the carrier aggregation capability information. The first frequency domain resource includes frequency domain resources occupied by M2 second carriers. A bandwidth of the first carrier is less than or equal to a first bandwidth, a bandwidth of the second carrier is greater than or equal to a second bandwidth, and the second bandwidth is greater than or equal to the first bandwidth. According to the foregoing method, the RAN node can determine a carrier aggregation capability of the terminal for the first carrier, determine a carrier aggregation capability of the terminal for the second carrier based on the capability, and configure, based on the carrier aggregation capability of the terminal for the second carrier, specific second carriers on which the terminal transmits data.

## Description

This application claims priority to Chinese Patent Application No. 202410176995.0, filed with the China National Intellectual Property Administration on February 7, 2024 and entitled "CONFIGURATION METHOD AND APPARATUS", which is incorporated herein by reference in its entirety.

### TECHNICAL FIELD

This application relates to the field of communication technologies, and in particular, to a configuration method and an apparatus.

### BACKGROUND

For a frequency range (frequency range, FR) 1 of new radio (new radio, NR), when a subcarrier spacing (subcarrier spacing, SCS) is 15 kHz, a maximum bandwidth supported by a terminal for transmission on one component carrier (component carrier, CC) is 50 MHz, and when an SCS is 30 kHz or 60 kHz, a maximum bandwidth supported by the terminal for transmission on one CC is 100 MHz. However, with the generational evolution of wireless communication technologies, there are more available spectrum resources. Therefore, the terminal can support data transmission on a larger bandwidth. For example, a maximum bandwidth supported by the terminal on one CC may be greater than or equal to 400 MHz. However, currently, there is no method for configuring a large-bandwidth CC for the terminal.

### SUMMARY

This application provides a configuration method and an apparatus, to configure a large-bandwidth CC for a terminal.

To achieve the foregoing objective, the following technical solutions are used in this application.

According to a first aspect, a configuration method is provided, and the method may be performed by a terminal. The terminal herein may refer to the terminal itself, or may refer to a processor, a module, a logical node, a chip, a chip system, or the like that is in the terminal and implements the method.

The method includes: The terminal sends carrier aggregation capability information of the terminal, receives carrier aggregation configuration information, and communicates with a radio access network node on a first frequency domain resource configured by using the carrier aggregation configuration information. The carrier aggregation capability information indicates that the terminal supports joint data transmission on N1 first carriers, a bandwidth of the first carrier is less than or equal to a first bandwidth, and N1 is an integer greater than 1. The carrier aggregation configuration information is determined based on the carrier aggregation capability information, and the carrier aggregation configuration information is used to configure the first frequency domain resource. The first frequency domain resource includes frequency domain resources occupied by M2 second carriers, a bandwidth of the second carrier is greater than or equal to a second bandwidth, the second bandwidth is greater than or equal to the first bandwidth, and M2 is a positive integer.

According to the method provided in the first aspect, the terminal may send the carrier aggregation capability information, so that an apparatus that receives the carrier aggregation capability information, for example, the radio access network node, can determine a carrier aggregation capability of the terminal for the first carrier, determine a carrier aggregation capability of the terminal for the second carrier based on the aggregation capability of the terminal for the first carrier, and configure, based on the carrier aggregation capability of the terminal for the second carrier, specific second carriers on which the terminal transmits data.

In a possible implementation, M2 is related to a first value, the first value is a ratio of a fourth bandwidth to a third bandwidth, the third bandwidth is determined based on the bandwidth of the second carrier, and the fourth bandwidth is determined based on the bandwidth of the first carrier; or the first value is configured by the radio access network node.

Based on the foregoing possible implementation, M2 may be obtained based on N1 and the first value. The first value is related to the third bandwidth and the fourth bandwidth. Therefore, the carrier aggregation capability of the terminal for the first carrier may be converted into the carrier aggregation capability of the terminal for the second carrier, to determine specific second carriers on which the terminal transmits data.

In a possible implementation, specific values of the third bandwidth and the fourth bandwidth are related to a subcarrier spacing. In other words, for different subcarrier spacings, the third bandwidth and the fourth bandwidth may have different values. For example, for a carrier with a subcarrier spacing of 15 kHz, the third bandwidth is 50 MHz, and the fourth bandwidth is 200 MHz. In this case, the first value is 4. For a carrier with a subcarrier spacing of 30 kHz, the third bandwidth is 100 MHz, and the fourth bandwidth is 400 MHz. In this case, the first value is 4. For another example, for a carrier with a subcarrier spacing of 15 kHz, the third bandwidth is 50 MHz, and the fourth bandwidth is 400 MHz. In this case, the first value is 8. For a carrier with a subcarrier spacing of 30 kHz, the third bandwidth is 100 MHz, and the fourth bandwidth is 400 MHz. In this case, the first value is 4.

Based on the foregoing possible implementation, the third bandwidth and the fourth bandwidth may be determined based on a subcarrier spacing corresponding to a carrier in an operating band of the terminal, to determine the first value.

In a possible implementation, the specific values of the third bandwidth and the fourth bandwidth are related to a parameter of the operating band (operating band) of the terminal. In other words, for carriers in different operating bands, the third bandwidth and the fourth bandwidth may have different values. For example, for a carrier in an FR 1 frequency band, the third bandwidth is 50 MHz, and the fourth bandwidth is 200 MHz. In this case, the first value is 4. For a carrier in an FR 2 frequency band, the third bandwidth is 200 MHz, and the fourth bandwidth is 800 MHz. In this case, the first value is 4. For another example, for a carrier in the FR 1 frequency band, the third bandwidth is 50 MHz, and the fourth bandwidth is 400 MHz. In this case, the first value is 8. For a carrier in the FR 2 frequency band, the third bandwidth is 200 MHz, and the fourth bandwidth is 800 MHz. In this case, the first value is 4.

Based on the foregoing possible implementation, the third bandwidth and the fourth bandwidth may be determined based on the parameter of the operating band of the terminal, to determine the first value.

In a possible implementation, M2 is further related to a first factor of proportionality, and the first factor of proportionality is greater than 1, or the first factor of proportionality is greater than 0 and less than 1.

Based on the foregoing possible implementation, M2 may be obtained based on N1, the first value, and the first factor of proportionality. The first factor of proportionality is related to compatibility of a communication system with large-bandwidth transmission. Therefore, M2 may be caused to match the compatibility of the communication system with the large-bandwidth transmission.

In a possible implementation, the first frequency domain resource further includes frequency domain resources occupied by N2 first carriers, and N2 is a positive integer.

Based on the foregoing possible implementation, the terminal may transmit data on the frequency domain resources occupied by the M2 second carriers and the frequency domain resources occupied by the N2 first carriers.

In a possible implementation, N2 is related to the first value, the first value is the ratio of the fourth bandwidth to the third bandwidth, the third bandwidth is determined based on the bandwidth of the second carrier, and the fourth bandwidth is determined based on the bandwidth of the first carrier; or the first value is configured by the radio access network node.

Based on the foregoing possible implementation, N2 may be obtained based on N1 and the first value. The first value is related to the third bandwidth and the fourth bandwidth. Therefore, the carrier aggregation capability of the terminal for the first carrier may be converted into a carrier aggregation capability of the terminal for the first carrier and the second carrier, to determine specific second carriers on which the terminal transmits data.

In a possible implementation, N2 is further related to the first factor of proportionality, and the first factor of proportionality is greater than 1, or the first factor of proportionality is greater than 0 and less than 1.

Based on the foregoing possible implementation, N2 may be obtained based on N1, the first value, and the first factor of proportionality. The first factor of proportionality is related to the compatibility of the communication system with the large-bandwidth transmission. Therefore, N2 may be caused to match the compatibility of the communication system with the large-bandwidth transmission.

In a possible implementation, the carrier aggregation capability information further indicates that the terminal supports joint data transmission on M1 second carriers, and M1 is an integer greater than 1.

Based on the foregoing possible implementation, the terminal may further report the carrier aggregation capability for the second carrier, so that the radio access network node configures a carrier aggregation manner for the terminal with reference to the capability.

In a possible implementation, the third bandwidth is a bandwidth of a second carrier with a largest bandwidth in the M1 second carriers, and the fourth bandwidth is a bandwidth of a first carrier with a largest bandwidth in the N1 first carriers.

Based on the foregoing possible implementation, if the third bandwidth is determined based on a maximum value of the bandwidth of the second carrier, and the first value is determined based on a maximum value of the bandwidth of the first carrier, it can be ensured that a processing capability of the terminal can cope with any value (less than or equal to a configurable maximum value), of the bandwidth of the second carrier, configured by a network device.

In a possible implementation, the method further includes: sending first indication information, where the first indication information indicates the first factor of proportionality.

Based on the foregoing possible implementation, an apparatus that receives the first indication information, for example, the radio access network node, may determine the first factor of proportionality, and then configure the carrier aggregation manner for the terminal based on the first factor of proportionality.

According to a second aspect, a configuration method is provided, and the method may be performed by a radio access network node. The radio access network node herein may refer to the radio access network node itself, or may refer to a processor, a module, a logical node, a chip, a chip system, or the like that is in the radio access network node and implements the method.

The method includes: The radio access network node receives carrier aggregation capability information of a terminal, sends carrier aggregation configuration information, and communicates with the terminal on a first frequency domain resource configured by using the carrier aggregation configuration information. The carrier aggregation capability information indicates that the terminal supports joint data transmission on N1 first carriers, a bandwidth of the first carrier is less than or equal to a first bandwidth, and N1 is an integer greater than 1. The carrier aggregation configuration information is determined based on the carrier aggregation capability information, and the carrier aggregation configuration information is used to configure the first frequency domain resource. The first frequency domain resource includes frequency domain resources occupied by M2 second carriers, a bandwidth of the second carrier is greater than or equal to a second bandwidth, the second bandwidth is greater than or equal to the first bandwidth, and M2 is a positive integer.

According to the method provided in the second aspect, the radio access network node may determine a carrier aggregation capability of the terminal for the first carrier based on the carrier aggregation capability information, determine a carrier aggregation capability of the terminal for the second carrier based on the aggregation capability of the terminal for the first carrier, and configure, based on the carrier aggregation capability of the terminal for the second carrier, specific second carriers on which the terminal transmits data.

In a possible implementation, M2 is related to a first value, the first value is a ratio of a fourth bandwidth to a third bandwidth, the third bandwidth is determined based on a bandwidth of a second carrier in M1 second carriers, and the fourth bandwidth is determined based on a bandwidth of a first carrier in the N1 first carriers.

Based on the foregoing possible implementation, M2 may be obtained based on N1 and the first value. The first value is related to the third bandwidth and the fourth bandwidth. Therefore, the carrier aggregation capability of the terminal for the first carrier may be converted into the carrier aggregation capability of the terminal for the second carrier, to determine specific second carriers on which the terminal transmits data.

In a possible implementation, specific values of the third bandwidth and the fourth bandwidth are related to a subcarrier spacing corresponding to a carrier. In other words, for different corresponding carriers, the third bandwidth and the fourth bandwidth may have different values. For example, for a carrier with a subcarrier spacing of 15 kHz, the third bandwidth is 50 MHz, and the fourth bandwidth is 200 MHz. In this case, the first value is 4. For a carrier with a subcarrier spacing of 30 kHz, the third bandwidth is 100 MHz, and the fourth bandwidth is 400 MHz. In this case, the first value is 4. For another example, for a carrier with a subcarrier spacing of 15 kHz, the third bandwidth is 50 MHz, and the fourth bandwidth is 400 MHz. In this case, the first value is 8. For a carrier with a subcarrier spacing of 30 kHz, the third bandwidth is 100 MHz, and the fourth bandwidth is 400 MHz. In this case, the first value is 4.

Based on the foregoing possible implementation, the third bandwidth and the fourth bandwidth may be determined based on a subcarrier spacing corresponding to a carrier in an operating band of the terminal, to determine the first value.

In a possible implementation, the specific values of the third bandwidth and the fourth bandwidth are related to a parameter of an operating band (operating band) that a carrier is in. In other words, for carriers in different operating bands, the third bandwidth and the fourth bandwidth may have different values. For example, for a carrier in an FR 1 frequency band, the third bandwidth is 50 MHz, and the fourth bandwidth is 200 MHz. In this case, the first value is 4. For a carrier in an FR 2 frequency band, the third bandwidth is 200 MHz, and the fourth bandwidth is 800 MHz. In this case, the first value is 4. For another example, for a carrier in the FR 1 frequency band, the third bandwidth is 50 MHz, and the fourth bandwidth is 400 MHz. In this case, the first value is 8. For a carrier in the FR 2 frequency band, the third bandwidth is 200 MHz, and the fourth bandwidth is 800 MHz. In this case, the first value is 4.

Based on the foregoing possible implementation, the third bandwidth and the fourth bandwidth may be determined based on the parameter of the operating band of the terminal, to determine the first value.

In a possible implementation, M2 is further related to a first factor of proportionality, and the first factor of proportionality is greater than 1, or the first factor of proportionality is greater than 0 and less than 1.

Based on the foregoing possible implementation, M2 may be obtained based on N1, the first value, and the first factor of proportionality. The first factor of proportionality is related to compatibility of a communication system with large-bandwidth transmission. Therefore, M2 may be caused to match the compatibility of the communication system with the large-bandwidth transmission.

In a possible implementation, the first frequency domain resource further includes frequency domain resources occupied by N2 first carriers, and N2 is a positive integer.

Based on the foregoing possible implementation, the terminal can transmit data on the frequency domain resources occupied by the M2 second carriers and the frequency domain resources occupied by the N2 first carriers.

In a possible implementation, N2 is related to the first value, the first value is the ratio of the fourth bandwidth to the third bandwidth, the third bandwidth is determined based on a bandwidth of a second carrier in the M1 second carriers, and the fourth bandwidth is determined based on a bandwidth of a first carrier in the N1 first carriers.

Based on the foregoing possible implementation, N2 may be obtained based on N1 and the first value. The first value is related to the third bandwidth and the fourth bandwidth. Therefore, the carrier aggregation capability of the terminal for the first carrier may be converted into a carrier aggregation capability of the terminal for the first carrier and the second carrier, to determine specific second carriers on which the terminal transmits data.

In a possible implementation, N2 is further related to the first factor of proportionality, and the first factor of proportionality is greater than 1, or the first factor of proportionality is greater than 0 and less than 1.

Based on the foregoing possible implementation, N2 may be obtained based on N1, the first value, and the first factor of proportionality. The first factor of proportionality is related to the compatibility of the communication system with the large-bandwidth transmission. Therefore, N2 may be caused to match the compatibility of the communication system with the large-bandwidth transmission.

In a possible implementation, the carrier aggregation capability information further indicates that the terminal supports joint data transmission on the M1 second carriers, and M1 is an integer greater than 1.

Based on the foregoing possible implementation, the terminal may further report the carrier aggregation capability for the second carrier, so that the radio access network node configures a carrier aggregation manner for the terminal with reference to the capability.

In a possible implementation, the third bandwidth is a bandwidth of a second carrier with a largest bandwidth in the M1 second carriers, and the fourth bandwidth is a bandwidth of a first carrier with a largest bandwidth in the N1 first carriers.

Based on the foregoing possible implementation, if the third bandwidth is determined based on a maximum value of the bandwidth of the second carrier, and the first value is determined based on a maximum value of the bandwidth of the first carrier, it can be ensured that a processing capability of the terminal can cope with any value (less than or equal to a configurable maximum value), of the bandwidth of the second carrier, configured by a network device.

In a possible implementation, the method further includes: receiving first indication information, where the first indication information indicates the first factor of proportionality.

Based on the foregoing possible implementation, the radio access network node may determine the first factor of proportionality, and then configure the carrier aggregation manner for the terminal based on the first factor of proportionality.

According to a third aspect, a configuration method is provided, and the method may be performed by a terminal. The terminal herein may refer to the terminal itself, or may refer to a processor, a module, a logical node, a chip, a chip system, or the like that is in the terminal and implements the method.

The method includes: The terminal sends carrier aggregation capability information of the terminal, receives carrier aggregation configuration information, and communicates with a radio access network node on a first frequency domain resource configured by using the carrier aggregation configuration information. The carrier aggregation capability information indicates at least one aggregation manner of a first carrier and a second carrier. A bandwidth of the first carrier is less than or equal to a first bandwidth, a bandwidth of the second carrier is greater than or equal to a second bandwidth, and the second bandwidth is greater than or equal to the first bandwidth. The carrier aggregation configuration information is used to configure the first frequency domain resource, and the first frequency domain resource includes frequency domain resources occupied by P1 first carriers and frequency domain resources occupied by Q1 second carriers. P1 and Q1 are obtained based on the carrier aggregation capability information, and P1 and Q1 are not both 0.

According to the method provided in the third aspect, the terminal causes, by using the carrier aggregation capability information, an apparatus (for example, the radio access network node) that receives the carrier aggregation capability information to determine the first frequency domain resource based on the at least one aggregation manner included in the carrier aggregation capability information. The aggregation manner indicates an aggregation manner of the first carrier and the second carrier. The bandwidth of the first carrier is less than or equal to the first bandwidth, the bandwidth of the second carrier is greater than or equal to the second bandwidth, and the second bandwidth is greater than or equal to the first bandwidth. Therefore, the second carrier may be considered as a large-bandwidth CC. Therefore, the method provides a large-bandwidth CC configuration method.

In a possible implementation, the at least one aggregation manner at least includes a first aggregation manner, the first aggregation manner indicates that the terminal supports joint data transmission on P2 first carriers and Q2 second carriers, P2 and Q2 are integers, and P2 and Q2 are not both zero.

Based on the foregoing possible implementation, the apparatus (for example, the radio access network node) that receives the carrier aggregation capability information may configure the first frequency domain resource for the terminal based on the first aggregation manner, so that the terminal communicates with the radio access network node on the first frequency domain resource.

In a possible implementation, P2 is an integer greater than or equal to P1, and Q2 is an integer greater than or equal to Q1.

Based on the foregoing possible implementation, it can be ensured that a carrier aggregation manner configured by using the carrier aggregation configuration information does not exceed a carrier aggregation capability reported by the terminal.

In a possible implementation, the at least one aggregation manner includes the first aggregation manner and a second aggregation manner. The first aggregation manner indicates that the terminal supports joint data transmission on the P2 first carriers and the Q2 second carriers. The second aggregation manner indicates that the terminal supports joint data transmission on P3 first carriers and Q3 second carriers, P2, Q2, P3, and Q3 are integers, P2 and Q2 are not both zero, and P3 and Q3 are not both zero.

Based on the foregoing possible implementation, the apparatus (for example, the radio access network node) that receives the carrier aggregation capability information may configure the first frequency domain resource for the terminal based on the first aggregation manner and the second aggregation manner.

In a possible implementation, P3 is an integer greater than or equal to P1, and Q3 is an integer greater than or equal to Q1; or P2 is an integer greater than or equal to P1, and Q2 is an integer greater than or equal to Q1.

Based on the foregoing possible implementation, it can be ensured that the carrier aggregation manner configured by using the carrier aggregation configuration information satisfies the carrier aggregation capability reported by the terminal.

According to a fourth aspect, a configuration method is provided, and the method may be performed by a radio access network node. The radio access network node herein may refer to the radio access network node itself, or may refer to a processor, a module, a logical node, a chip, a chip system, or the like that is in the radio access network node and implements the method.

The method includes: The radio access network node receives carrier aggregation capability information of a terminal, sends carrier aggregation configuration information, and communicates with the terminal on a first frequency domain resource configured by using the carrier aggregation configuration information. The carrier aggregation capability information indicates at least one aggregation manner of a first carrier and a second carrier. A bandwidth of the first carrier is less than or equal to a first bandwidth, a bandwidth of the second carrier is greater than or equal to a second bandwidth, and the second bandwidth is greater than or equal to the first bandwidth. The carrier aggregation configuration information is used to configure the first frequency domain resource, and the first frequency domain resource includes frequency domain resources occupied by P1 first carriers and frequency domain resources occupied by Q1 second carriers. P1 and Q1 are obtained based on the carrier aggregation capability information, and P1 and Q1 are not both 0.

According to the method provided in the fourth aspect, the radio access network node can determine the first frequency domain resource based on the at least one aggregation manner included in the carrier aggregation capability information. The aggregation manner indicates an aggregation manner of the first carrier and the second carrier. The bandwidth of the first carrier is less than or equal to the first bandwidth, the bandwidth of the second carrier is greater than or equal to the second bandwidth, and the second bandwidth is greater than or equal to the first bandwidth. Therefore, the second carrier may be considered as a large-bandwidth CC. Therefore, the method provides a large-bandwidth CC configuration method.

In a possible implementation, the at least one aggregation manner includes a first aggregation manner, the first aggregation manner indicates that the terminal supports joint data transmission on P2 first carriers and Q2 second carriers, P2 and Q2 are integers, and P2 and Q2 are not both zero.

Based on the foregoing possible implementation, an apparatus (for example, the radio access network node) that receives the carrier aggregation capability information may configure the first frequency domain resource for the terminal based on the first aggregation manner, so that the terminal communicates with the radio access network node on the first frequency domain resource.

In a possible implementation, P2 is an integer greater than or equal to P1, and Q2 is an integer greater than or equal to Q1.

Based on the foregoing possible implementation, it can be ensured that a carrier aggregation manner configured by using the carrier aggregation configuration information does not exceed a carrier aggregation capability reported by the terminal.

In a possible implementation, the at least one aggregation manner includes the first aggregation manner and a second aggregation manner. The first aggregation manner indicates that the terminal supports joint data transmission on the P2 first carriers and the Q2 second carriers. The second aggregation manner indicates that the terminal supports joint data transmission on P3 first carriers and Q3 second carriers, P2, Q2, P3, and Q3 are integers, P2 and Q2 are not both zero, and P3 and Q3 are not both zero.

Based on the foregoing possible implementation, the radio access network node may configure the first frequency domain resource for the terminal based on the first aggregation manner and the second aggregation manner.

In a possible implementation, P3 is an integer greater than or equal to P1, and Q3 is an integer greater than or equal to Q1; or P2 is an integer greater than or equal to P1, and Q2 is an integer greater than or equal to Q1.

Based on the foregoing possible implementation, it can be ensured that the carrier aggregation manner configured by using the carrier aggregation configuration information satisfies the carrier aggregation capability reported by the terminal.

According to a fifth aspect, a communication apparatus is provided to implement the foregoing method. The communication apparatus may be the terminal in the first aspect or the third aspect, or the communication apparatus may be the radio access network node in the second aspect or the fourth aspect. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the fifth aspect, in a possible implementation, the communication apparatus may include a processing module and an interface module. The processing module may be configured to implement a processing function in any one of the foregoing aspects and any possible implementation of the foregoing aspects. The processing module may be, for example, a processor. The interface module may also be referred to as an interface unit, and is configured to implement a sending function and/or a receiving function in any one of the foregoing aspects and any possible implementation of the foregoing aspects. The interface module may include an interface circuit, a transceiver machine, a transceiver, or a communication interface.

With reference to the fifth aspect, in a possible implementation, the interface module includes a sending module and a receiving module, respectively configured to implement the sending function and the receiving function in any one of the foregoing aspects and any possible implementation of the foregoing aspects.

According to a sixth aspect, a communication apparatus is provided, and includes a processor. The processor is configured to: be coupled to a storage; and after reading instructions in the storage, perform, according to the instructions, the method according to any one of the foregoing aspects. The communication apparatus may be the terminal in the first aspect or the third aspect, or the communication apparatus may be the radio access network node in the second aspect or the fourth aspect.

With reference to the sixth aspect, in a possible implementation, the communication apparatus further includes the storage. The storage is configured to store program instructions and data. Optionally, the storage and the processor are integrated together, or the storage is independent of the processor.

With reference to the sixth aspect, in a possible implementation, the communication apparatus is a chip or a chip system. Optionally, when the communication apparatus is a chip system, the communication apparatus may include a chip, or may include a chip and another discrete component.

According to a seventh aspect, a communication apparatus is provided, and includes a processor and an interface circuit. The interface circuit is configured to: receive a computer program or instructions, and transmit the computer program or the instructions to the processor. The processor is configured to execute the computer program or the instructions, to cause the communication apparatus to perform the method according to any one of the foregoing aspects. The communication apparatus may be the terminal in the first aspect or the third aspect, or the communication apparatus may be the radio access network node in the second aspect or the fourth aspect.

With reference to the seventh aspect, in a possible implementation, the communication apparatus is a chip or a chip system. Optionally, when the communication apparatus is a chip system, the communication apparatus may include a chip, or may include a chip and another discrete component.

According to an eighth aspect, a computer-readable storage medium is provided. The computer-readable storage medium stores instructions; and when the instructions are run on a computer, the computer is caused to perform the method according to any one of the foregoing aspects.

According to a ninth aspect, a computer program product including instructions is provided. When the instructions are run on a computer, the computer is caused to perform the method according to any one of the foregoing aspects.

According to a tenth aspect, a communication system is provided. The communication system includes the terminal configured to perform the first aspect and the radio access network node configured to perform the method in the second aspect.

According to an eleventh aspect, a communication system is provided. The communication system includes the terminal configured to perform the third aspect and the radio access network node configured to perform the fourth aspect.

For technical effects brought by any one of the possible implementations in the fifth aspect to the eleventh aspect, refer to the technical effects brought by any one of the first aspect to the fourth aspect or the different possible implementations in the first aspect to the fourth aspect. Details are not described herein again.

It may be understood that the solutions in the foregoing aspects may be combined if the solutions are not contradictory.

### BRIEF DESCRIPTION OF DRAWINGS

FIG. 1 is a diagram of an architecture of a communication system according to this application;
FIG. 2 is a diagram of a hardware structure of a communication apparatus according to this application;
FIG. 3 is a schematic flowchart 1 of a configuration method according to this application;
FIG. 4 is a schematic flowchart 2 of a configuration method according to this application; and
FIG. 5 is a diagram of a structure of a communication apparatus according to this application.

### DESCRIPTION OF EMBODIMENTS

Before technical solutions of this application are described, related technical terms in this application are described and explained. It may be understood that the descriptions and explanations are intended to facilitate understanding of this application, but should not be construed as a limitation on the protection scope claimed in this application.

### 1. Carrier aggregation (carrier aggregation, CA)

CA means that a plurality of CCs are aggregated together to transmit data for a terminal, and transmitting data by the terminal by using a CA technology may increase a transmission bandwidth. In a specific application, a radio access network (radio access network, RAN) node may configure related information about CA, so that the terminal can simultaneously send or receive data on a plurality of CCs. In a long term evolution (long term evolution, LTE) communication system and a previous communication system, the terminal may transmit data on one CC, but cannot transmit data on a plurality of CCs. After CA is introduced into a long term evolution advanced (long term evolution advanced, LTE-A) system, the terminal may transmit data on a plurality of CCs. Therefore, uplink and downlink throughputs of the terminal may multiply as a quantity of CCs increases.

In the LTE-A system, a maximum channel bandwidth on one CC is 20 MHz. However, in a new radio (new radio, NR) system, for an FR 1, a channel bandwidth on one CC may be as high as 100 MHz, and for an FR 2, a channel bandwidth on one CC may be higher. Specifically, for the FR 1, transmission bandwidth configurations (which may be represented by (numbers of resource blocks, NRBs)) corresponding to different SCSs and different CC channel bandwidths (unit: MHz) may be shown in Table 1, and for the FR 2, transmission bandwidth configurations (represented by NRBs) corresponding to different SCSs and different CC channel bandwidths (unit: MHz) may be shown in Table 2. A transmission bandwidth configuration refers to a quantity of radio resource blocks corresponding to a channel bandwidth. The FR 1 may represent low and medium frequency bands of NR, and a frequency range may be 410 MHz to 7125 MHz. The FR 2 may represent a high frequency band of NR, for example, a millimeter wave. The FR 2 may be further subdivided into an FR 2-1 and an FR 2-2. The FR 2-1 ranges from 24250 MHz to 52600 MHz, and the FR 2-2 ranges from 52600 MHz to 71000 MHz.

**Table 1**

| SCS (kHz) | 5 MHz | 10 MHz | 15 MHz | 20 MHz | 25 MHz | 30 MHz | 35 MHz | 40 MHz | 45 MHz | 50 MHz | 60 MHz | 70 MHz | 80 MHz | 90 MHz | 100 MHz |
|---|---|---|---|---|---|---|---|---|---|---|---|---|---|---|---|
| | N_{RB} | N_{RB} | N_{RB} | N_{RB} | N_{RB} | N_{RB} | N_{RB} | N_{RB} | N_{RB} | N_{RB} | N_{RB} | N_{RB} | N_{RB} | N_{RB} | N_{RB} |
| 15 | 25 | 52 | 79 | 106 | 133 | 160 | 188 | 216 | 242 | 270 | N/A | N/A | N/A | N/A | N/A |
| 30 | 11 | 24 | 38 | 51 | 65 | 78 | 92 | 106 | 119 | 133 | 162 | 189 | 217 | 245 | 273 |
| 60 | N/A | 11 | 18 | 24 | 31 | 38 | 44 | 51 | 58 | 65 | 79 | 93 | 107 | 121 | 135 |

**Table 2**

| SCS (kHz) | 50 MHz | 100 MHz | 200 MHz | 400 MHz | 800 MHz | 1600 MHz | 2000 MHz |
|---|---|---|---|---|---|---|---|
| | N_{RB} | N_{RB} | N_{RB} | N_{RB} | N_{RB} | N_{RB} | N_{RB} |
| 60 | 66 | 132 | 264 | N/A | N/A | N/A | N/A |
| 120 | 32 | 66 | 132 | 264 | N/A | N/A | N/A |
| 480 | N/A | N/A | N/A | 66 | 124 | 248 | N/A |
| 960 | N/A | N/A | N/A | 33 | 62 | 124 | 148 |

In Table 1 or Table 2, N_{RB} represents a quantity of radio resource blocks (resource blocks, RBs) corresponding to a channel bandwidth, and N/A (not applicable) represents not applicable.

It can be learned from Table 1 or Table 2 that the terminal supports different transmission bandwidths for different SCSs.

It may be understood that, in addition to that different SCSs affect a transmission bandwidth supported by the terminal, due to a limitation of factors such as hardware conditions (for example, a baseband processing capability and a radio frequency processing capability) of the terminal, a channel bandwidth supported by the terminal on one CC may vary with different frequency bands (bands). In other words, for different frequency bands, the terminal may support different channel bandwidths on one CC. Therefore, after establishing a connection to the radio access network node, the terminal needs to indicate, to the radio access network node, a specific channel bandwidth capability supported by the terminal for each frequency band, so that the radio access network node can configure an appropriate transmission bandwidth for the terminal based on the channel bandwidth capability of the terminal, to avoid that the radio access network node configures a transmission bandwidth that exceeds the channel bandwidth capability of the terminal. A maximum channel bandwidth in the channel bandwidth capability reported by the terminal for each frequency band is a maximum channel bandwidth supported on one CC in the frequency band.

For example, it can be learned from Table 1 that, for any frequency band of the FR 1, when an SCS is 15 kHz and a channel bandwidth of a CC is 20 MHz, a transmission bandwidth configuration is 106 RBs; when an SCS is 30 kHz and a channel bandwidth of a CC is 40 MHz, a transmission bandwidth configuration is 106 RBs; or when an SCS is 60 kHz and a channel bandwidth of a CC is 80 MHz, a transmission bandwidth configuration is 107 RBs.

For example, it can be learned from Table 2 that, for any frequency band of the FR 2, the terminal may report that a maximum channel bandwidth supported when an SCS is 60 kHz is 200 MHz.

It may be understood that, on the basis of indicating, to the radio access network node, the maximum channel bandwidth supported by the terminal for each SCS and each frequency band, the terminal may further report CA capabilities of the terminal to the radio access network node. Based on aggregation manners among a plurality of CCs, the CA capabilities of the terminal may be classified into an intra-band contiguous CA (intra-band contiguous carrier aggregation) capability, an intra-band non-contiguous CA (intra-band non-contiguous carrier aggregation) capability, and an inter-band CA (inter-band carrier aggregation) capability.

### (1) Intra-band contiguous carrier aggregation capability

The intra-band contiguous CA capability means that the terminal supports joint data transmission on a plurality of contiguous CCs in frequency domain in one frequency band. Specifically, because the CA capability of the terminal is classified into a plurality of CA bandwidth classes, different frequency bands may correspond to different CA bandwidth classes, each CA bandwidth class represents a carrier aggregation manner supported by the terminal in one frequency band, and the carrier aggregation manner includes a channel bandwidth after carrier aggregation and a quantity of contiguously aggregated CCs. For each frequency band, the terminal indicates, to the radio access network node, a CA bandwidth class corresponding to the frequency band or a frequency band group. A CA capability class may be specifically represented by a carrier aggregation bandwidth class (CA bandwidth class) in radio resource control (radio resource control, RRC) signaling, for example, terminal capability information (user equipment capability information) signaling. A CA bandwidth class corresponding to the FR 1 may be shown in Table 3. Table 3 is applicable to all frequency bands of the FR 1 of NR.

**Table 3**

| NR CA bandwidth class | Channel bandwidth after (carrier) aggregation | Quantity of contiguous CCs | Fallback group (fallback group) |
|---|---|---|---|
| A | BW_{Channel} ≤ BW_{Channel,max} | 1 | 1, 2, 3 |
| B | 20 MHz ≤ BW_{Channel_CA} ≤ 100 MHz | 2 | 2, 3 |
| C | 100 MHz ≤ BW_{Channel_}CA ≤ 2BW_{Channel,max} | 2 | 1, 3 |
| D | 200 MHz ≤ BW_{Channel_}CA ≤ 3BW_{Channel,max} | 3 | |
| E | 300 MHz < BW_{Channel_}CA ≤ 4BW_{Channel,max} | 4 | |
| G | 100 MHz < BW_{Channel_CA} ≤ 150 MHz | 3 | 2 |
| H | 150 MHz < BW_{Channel_CA} ≤ 200 MHz | 4 | |
| I | 200 MHz < BW_{Channel_CA} ≤ 250 MHz | 5 | |
| J | 250 MHz < BW_{Channel_CA} ≤ 300 MHz | 6 | |
| K | 300 MHz < BW_{Channel_CA} ≤ 350 MHz | 7 | |
| L | 350 MHz < BW_{Channel_CA} ≤ 400 MHz | 8 | |
| M | 50 MHz ≤ BW_{Channel_CA} ≤ 200 MHz | 3 | 3 |
| N | 80 MHz ≤ BW_{Channel_CA} ≤ 300 MHz | 4 | |
| O | 100 MHz ≤ BW_{Channel_CA} ≤ 400 MHz | 5 | |

In Table 3, BW_{Channel,max} refers to a largest channel bandwidth in channel bandwidths of all frequency bands supported by the terminal. For the FR 1, a value of BW_{Channel,max} may be 100 MHz. BW_{Channel_CA} refers to a channel bandwidth after carrier aggregation performed on a plurality of CCs, and BW_{Channel_}represents a channel bandwidth for transmission on one CC. For example, a CA bandwidth class G is used as an example for description. If the terminal indicates, to the radio access network node, that a CA bandwidth class supported for a band 41 is G, it indicates that the terminal may support joint data transmission on three contiguous CCs in frequency domain in the band 41, and a frequency range of a channel bandwidth after aggregation of the three CCs is 100 MHz to 150 MHz.

In Table 3, the fallback group is a group including a plurality of CA bandwidth classes. The terminal should support fallback to a low-order CA bandwidth class in a same fallback group, to ensure that when the radio access network node cannot perform configuration based on a CA bandwidth class reported by the terminal, the radio access network node can at least fall back to a low-order CA aggregation manner in the fallback group to perform configuration for the terminal, so as to maintain a connection between the terminal and a network.

The fourth column of Table 3 lists three fallback groups: a fallback group 1, a fallback group 2, and a fallback group 3. A CA bandwidth class A needs to be supported by each fallback group. The fallback group 1 includes at least one of CA bandwidth classes C to E and the CA bandwidth class A. The fallback group 2 includes at least one of CA bandwidth classes G to L, the CA bandwidth class A, and a CA bandwidth class B. The fallback group 3 includes at least one of the CA bandwidth classes C to E, at least one of CA bandwidth classes M to O, the CA bandwidth class A, and the CA bandwidth class B.

Example 1: A terminal that supports the CA bandwidth class E should also support the CA bandwidth class A, because the CA bandwidth class A and the CA bandwidth class E both belong to the fallback group 1, and a CA capability corresponding to the CA bandwidth class A is weaker than that corresponding to the CA bandwidth class E.

Example 2: A terminal that supports the CA bandwidth class G should also support the CA bandwidth classes A and B, because the three CA bandwidth classes all belong to the fallback group 2, and a CA capability corresponding to the CA bandwidth class A or B is weaker than that corresponding to the CA bandwidth class G.

Further, descriptions are provided with reference to configuration of a channel bandwidth and a fallback group. For example, if the terminal reports band 1 (G) to the radio access network node, it indicates that a CA bandwidth class supported by the terminal for the band 1 is G. It can be learned from Table 3 that the CA bandwidth class G indicates that the terminal supports transmission on a maximum of three contiguous CCs in the band 1, and a channel bandwidth after aggregation of the three CC carriers ranges from 100 MHz to 150 MHz. Further, with reference to the channel bandwidth capability of one CC provided in Table 1, if an SCS is 15 kHz, a channel bandwidth supported by the terminal on one CC in the band 1 does not exceed 50 MHz. In this case, the radio access network node may configure a maximum channel bandwidth of 50 MHz for each of the three CCs for the terminal, contiguous carrier aggregation may be performed on the three CCs, and a channel bandwidth after the aggregation does not exceed 150 MHz. (3 * 50 = 150, and a limitation of 100 MHz < BW_{Channel_CA} ≤ 150 MHz is also satisfied.) It may be understood that, the radio access network node may alternatively configure three contiguous CCs with different channel bandwidths for the terminal. For example, channel bandwidths of two CCs in the three CCs are 50 MHz, and a channel bandwidth of the remaining CC is 30 MHz. In this case, a channel bandwidth after carrier aggregation performed on the three CCs is 130 MHz. Alternatively, the radio access network node may perform configuration based on the fallback CA bandwidth class B. For example, the radio access network node configures two contiguous 40 MHz CCs for the terminal. In this case, a channel bandwidth after aggregation of the two CC carriers is 80 MHz. Alternatively, the radio access network node may perform configuration for the terminal based on the fallback CA bandwidth class A, for example, configure one 80 MHz CC. In this case, a total carrier aggregation bandwidth is 80 MHz.

### (2) Intra-band non-contiguous carrier aggregation capability

The intra-band non-contiguous CA capability means that the terminal supports joint data transmission on a plurality of non-contiguous CCs in frequency domain in one frequency band.

For example, the terminal supports joint data transmission on two non-contiguous CCs in frequency domain in a band 1. The terminal may report, to the radio access network node, CA bandwidth classes A corresponding to the two CCs. To be specific, the terminal reports a CA group of band 1 (A) + band 1 (A), which indicates that the terminal may support two non-contiguous CCs in the band 1. A channel bandwidth of each CC is limited by a maximum channel bandwidth corresponding to the CC. Because the band 1 belongs to the FR 1, a maximum channel bandwidth corresponding to one CC may be obtained by querying Table 1. For example, when an SCS is 15 kHz, the maximum channel bandwidth is 50 MHz. In this case, the channel bandwidth of each of the two non-contiguous CCs does not exceed 50 MHz.

For example, the terminal supports joint data transmission on three CCs in a band 2. When a CA group reported by the terminal is band 2 (A) + band 2 (B), it can be learned from Table 3 that the CA bandwidth class A indicates that transmission on one CC is supported, and the CA bandwidth class B indicates that contiguous carrier aggregation of two CCs is supported. In this case, band 2 (A) + band 2 (B) indicates that the terminal can support a CA group of three CCs in the band 2, and the three CCs may be represented by a CC 1 to a CC 3. The CC 1 and the CC 2/CC 3 are non-contiguous in frequency domain, and the CC 2 and the CC 3 are contiguous in frequency domain (corresponding to band 2 (B)). A channel bandwidth of the CC 1 is limited by a maximum channel bandwidth capability that corresponds to one CC and is reported by the terminal in the band 2. Because the band 2 belongs to the FR 1, it can be learned from Table 1 that if an SCS is 15 kHz, the maximum channel bandwidth capability is 50 MHz. It can be learned from Table 3 that a channel bandwidth range after aggregation of the two contiguous CCs, namely, the CC 2 and the CC 3, is a channel bandwidth after aggregation of carriers corresponding to the CA bandwidth class B, namely, [20 MHz, 100 MHz].

### (3) Inter-band carrier aggregation capability

The inter-band CA capability means that the terminal supports joint data transmission on a plurality of CCs in different frequency bands, and the plurality of CCs may be contiguous or non-contiguous in frequency domain.

For example, the terminal supports joint data transmission on two non-contiguous CCs in a band 1 and a band 2. When a CA group reported by the terminal is band 1(A) + band 2(A), it indicates that the terminal supports configuration of one CC in each of the band 1 and the band 2, and channel bandwidths of the CCs are respectively limited by channel bandwidth capabilities reported by the terminal in the band 1 and the band 2. It can be learned from Table 1 that, for 15 kHz, a channel bandwidth of each CC does not exceed 50 MHz.

For example, the terminal supports joint data transmission on three CCs in the band 1 and the band 2. When a CA group reported by the terminal is band 1(A) + band 2(B), it indicates that the terminal supports a CA group of configuration of one CC (represented by a CC 1) in the band 1 and configuration of two CCs (represented by a CC 2 and a CC 3) in the band 2. The CC 1 and the CC 2/CC 3 are non-contiguous in frequency domain, and the CC 2 and the CC 3 are contiguous in frequency domain (corresponding to band 2 (B)). A channel bandwidth of the CC 1 does not exceed 50 MHz, and a channel bandwidth range after aggregation of the two contiguous CCs, namely, the CC 2 and the CC 3, is a channel bandwidth after aggregation of carriers corresponding to the CA bandwidth class B, namely, [20 MHz, 100 MHz].

### 2. Large-bandwidth transmission

With the generational evolution of wireless communication technologies, a communication system may expand into a wider spectrum, and there are more available spectrum resources. Therefore, the terminal can support data transmission on a larger channel bandwidth, to improve a transmission rate. It should be understood that if the terminal performs transmission on one CC, a channel bandwidth of the terminal is limited (for example, for an SCS of 15 kHz, the channel bandwidth does not exceed 50 MHz). However, if the terminal performs transmission on a plurality of CCs (namely, during carrier aggregation), it is easier to increase a transmission bandwidth. Therefore, the carrier aggregation is applicable to the large-bandwidth transmission. If the channel bandwidth of the terminal needs to be expanded to transmit a larger data block, there are two possibilities:

### (1) Increase a quantity of carrier aggregation CCs for the terminal.

If the quantity of carrier aggregation CCs for the terminal is increased, a large data block may be divided into several pieces, and the several pieces of data are respectively transmitted on a plurality of CCs. Currently, a terminal of NR can support a maximum of 16 downlink carriers, and more downlink carriers may be supported in the future.

It may be understood that increasing a channel bandwidth for transmission by the terminal by increasing the quantity of carrier aggregation CCs without changing a transmission bandwidth of a single CC comes at the cost of overheads of downlink control signaling. For example, if one piece of control signaling (for example, downlink control information (downlink control information, DCI)) may be used to schedule or manage one CC. When a channel bandwidth multiplies, overheads of the control signaling also multiply, and complexity is brought to scheduling and management by the radio access network node and reception and management by the terminal. Therefore, another idea may be considered. To be specific, a maximum channel bandwidth of each CC is expanded to transmit data for the terminal.

### (2) Expand the maximum channel bandwidth of each CC.

It can be learned from Table 1 that, for the FR 1 of NR, when an SCS is 15 kHz, a maximum channel bandwidth supported by the terminal for transmission on one CC is 50 MHz, and when an SCS is 30 kHz or 60 kHz, a maximum channel bandwidth supported by the terminal on one CC is 100 MHz. However, for a millimeter wave (mm wave) frequency band, a maximum channel bandwidth supported by the terminal on one CC may be greater than or equal to 400 MHz, as shown in Table 2. Alternatively, after spectrum of the LTE system are released, more contiguous spectrum is available for transmission, and a larger channel bandwidth may be configured for the terminal. A channel bandwidth greater than 400 MHz may be referred to as a large bandwidth, and a channel bandwidth less than 400 MHz may be referred to as a small bandwidth.

An advantage of expanding the maximum bandwidth of each CC is that if one CC corresponds to one piece of control signaling, one piece of control signaling can be used to schedule a larger bandwidth. Therefore, this method can reduce overheads of the control signaling. However, currently, there is no method for configuring a large-bandwidth CC for the terminal.

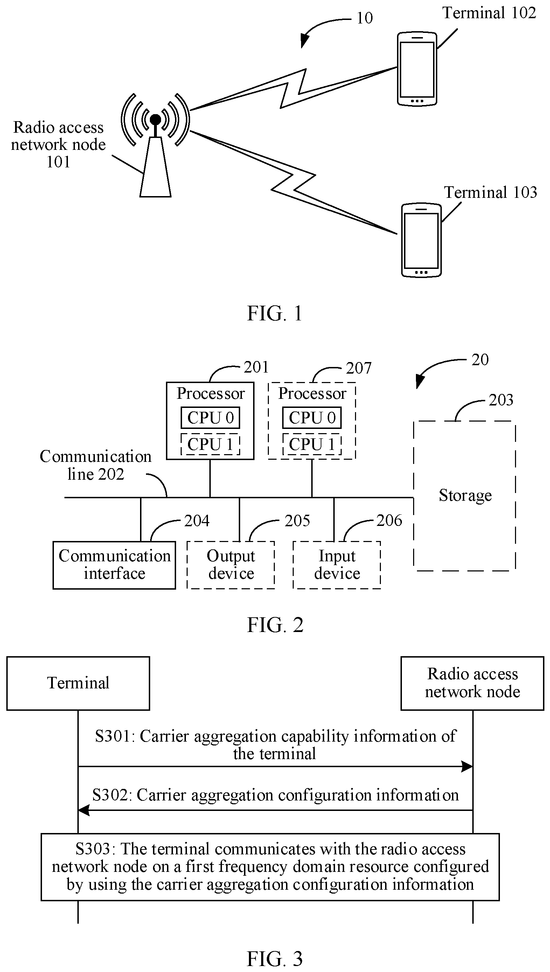

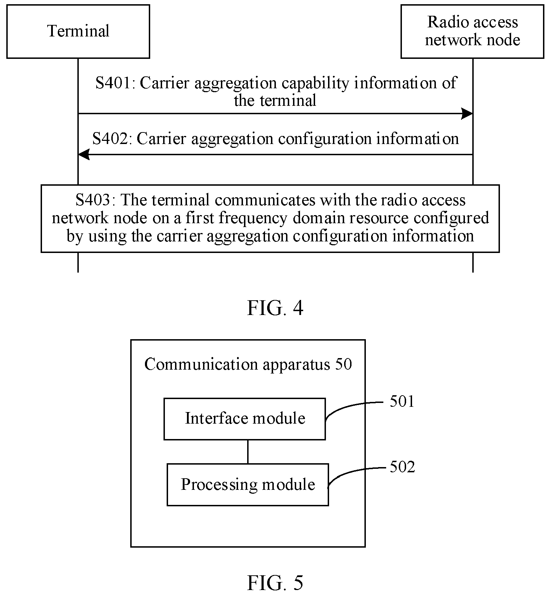

To resolve the foregoing problem, this application provides the following two configuration methods:
Method 1: The terminal sends carrier aggregation capability information of the terminal to the radio access network node, receives carrier aggregation configuration information, and communicates with the radio access network node on a first frequency domain resource configured by using the carrier aggregation configuration information. The carrier aggregation capability information of the terminal indicates that the terminal supports joint data transmission on N1 first carriers. The carrier aggregation configuration information is determined based on the carrier aggregation capability information. The first frequency domain resource includes frequency domain resources occupied by M2 second carriers, a bandwidth of the first carrier is less than or equal to a first bandwidth, a bandwidth of the second carrier is greater than or equal to a second bandwidth, and the second bandwidth is greater than or equal to the first bandwidth. According to the method, the terminal may send the carrier aggregation capability information, so that the radio access network node can determine a carrier aggregation capability of the terminal for the first carrier, determine a carrier aggregation capability of the terminal for the second carrier based on the aggregation capability of the terminal for the first carrier, and configure, based on the carrier aggregation capability of the terminal for the second carrier, specific second carriers on which the terminal transmits data. A specific process of Method 1 is described in the following method shown in FIG. 3. Details are not described herein.
Method 2: The terminal sends carrier aggregation capability information of the terminal to the radio access network node, receives carrier aggregation configuration information, and communicates with the radio access network node on a configured first frequency domain resource. The carrier aggregation capability information indicates at least one aggregation manner of a first carrier and a second carrier. A bandwidth of the first carrier is less than or equal to a first bandwidth, a bandwidth of the second carrier is greater than or equal to a second bandwidth, and the second bandwidth is greater than or equal to the first bandwidth. The first frequency domain resource includes frequency domain resources occupied by P1 first carriers and frequency domain resources occupied by Q1 second carriers. P1 and Q1 are obtained based on the carrier aggregation capability information, and P1 and Q1 are not both 0. According to the method, the radio access network node may obtain the at least one aggregation manner of the first carrier and the second carrier by using the carrier aggregation capability information of the terminal, determine an aggregation manner that satisfies or is inferior to the at least one aggregation manner, and configure the first frequency domain resource based on the aggregation manner, so that the terminal performs joint data transmission on the P1 first carriers and the Q1 second carriers. A specific process of Method 2 is described in the following method shown in FIG. 4. Details are not described herein.

The method provided in this application may be applied to various communication systems. For example, the communication system may be an LTE system, a 5G communication system, a Wi-Fi system, a 3GPP-related communication system, a future evolved communication system (for example, a 6th generation (6th generation, 6G) communication system), or a system integrating a plurality of systems. This is not limited. 5G may also be referred to as NR. The following uses a communication system 10 shown in FIG. 1 as an example to describe the method provided in embodiments of this application. FIG. 1 is merely a diagram, and does not constitute a limitation on an applicable scenario of the technical solutions provided in this application.

The communication system 10 shown in FIG. 1 includes a radio access network node 101, and at least one terminal (for example, a terminal 102 and/or a terminal 103) communicatively connected to the radio access network node 101.

In this application, the terminal is a device that has a wireless transceiver function. The terminal may be deployed on land, including indoor, outdoor, handheld, or vehicle-mounted devices; may be deployed on water (for example, on a ship); or may be deployed in the air (for example, on an airplane, a balloon, and a satellite). The terminal may also be referred to as a terminal device. The terminal device may be user equipment (user equipment, UE), a mobile station (mobile station, MS), a mobile terminal (mobile terminal, MT), or the like, or may be a device configured to provide voice or data connectivity for a user. The UE includes a handheld device with a wireless communication function, a vehicle-mounted device (for example, UE on a car, a bicycle, an electric vehicle, an airplane, a ship, a train, or a high-speed train), a wearable device (for example, a smartwatch, a smart band, or a pedometer), or a compute device. For example, the UE may be a mobile phone (mobile phone), a tablet computer, a notebook computer, a palmtop computer, a mobile internet device (mobile internet device, MID), a satellite terminal, or a computer with a wireless transceiver function. The UE may alternatively be a virtual reality (virtual reality, VR) terminal device, an augmented reality (augmented reality, AR) terminal device, a wireless modem (modem), a smart point of sale (point of sale, POS) machine, customer premises equipment (customer premises equipment, CPE), a smart robot, a robot arm, a workshop device, a smart home device (for example, a refrigerator, a television, an air conditioner, or an electric meter), a wireless terminal in industrial control, a wireless terminal in self driving, a wireless terminal in telemedicine, a wireless terminal in a smart grid (smart grid), a wireless terminal in transportation security, a wireless terminal in a smart city (smart city), a wireless terminal in a smart home (smart home), a vehicle-mounted terminal, a roadside unit (roadside unit, RSU) with a terminal function, a flight device (for example, a smart robot, a hot air balloon, an uncrewed aerial vehicle, or an airplane), or the like. The terminal may alternatively be another device that has a terminal function. For example, the terminal may alternatively be a device that functions as a terminal in device to device (device to device, D2D) communication.

By way of example, and not limitation, the terminal in this application may be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. For example, the wearable device is not only a hardware device, but also a device that implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that are dedicated to only one type of application function and need to work with other devices such as smartphones, for example, various smart bands or smart jewelry for monitoring physical signs.

In this application, the terminal may be a terminal in an internet of things (internet of things, IoT) system. An IoT is an important component in development of future information technologies. A main technical feature of the IoT is to connect an object to a network by using a communication technology, to implement an intelligent network of human-machine interconnection and thing-thing interconnection. The terminal in this application may be a terminal in machine type communication (machine type communication, MTC). The terminal in this application may be a vehicle-mounted module, a vehicle-mounted assembly, a vehicle-mounted component, a vehicle-mounted chip, or a vehicle-mounted unit that is built in a vehicle as one or more components or units. The vehicle may implement the method in this application by using the vehicle-mounted module, the vehicle-mounted assembly, the vehicle-mounted component, the vehicle-mounted chip, or the vehicle-mounted unit that is built in the vehicle. The terminal in this application may be a means of delivery, for example, a vehicle. Therefore, this application may be applied to an internet of vehicles, for example, vehicle to everything (vehicle to everything, V2X), long term evolution vehicle (long term evolution vehicle, LTE-V), and vehicle to vehicle (vehicle to vehicle, V2V).

A form of the terminal is not limited in this application. An apparatus configured to implement a function of the terminal may be a terminal, or may be an apparatus that can support the terminal in implementing the function, for example, a chip system. The apparatus may be mounted in the terminal or used together with the terminal.

In this application, the radio access network node may be a device that has a wireless transceiver function, and may help the terminal implement radio access. The radio access network node in this application may also be referred to as a RAN node, a node in a RAN, a RAN node, an access network device, or the like. The radio access network node includes but is not limited to an evolved NodeB (NodeB, eNB, or e-NodeB, evolved NodeB) in LTE, an evolved NodeB (next generation eNB, ng-eNB) in next-generation LTE, a base station (gNodeB or gNB) in NR, a next-generation RAN (next generation radio access network, NG-RAN) node, a transmitting point (transmitting point, TP), a transmission reception point (transmission receiving point/transmission reception point, TRP), a 3GPP subsequently evolved base station, a next generation NodeB (next generation NodeB, gNB), a next generation NodeB in a 6G mobile communication system, a base station in a future mobile communication system, a satellite, an access node in a Wi-Fi system, a wireless relay node, a wireless backhaul node, an integrated access and backhaul (integrated access and backhaul, IAB) node, a RAN node in a mobile switching center non-terrestrial network (non-terrestrial network, NTN) communication system, to be specific, may be deployed on a high-altitude platform or a satellite, or the like. A base station may be a macro base station, a micro base station, a pico base station, a small cell, a relay station, a balloon station, or the like. A plurality of base stations may support networks using a same technology mentioned above, or may support networks using different technologies mentioned above. The base station may include one or more co-site or non-co-site TRPs. Alternatively, the RAN node may be a device that functions as a base station in D2D communication, internet of vehicles communication, uncrewed aerial vehicle communication, or machine communication. Alternatively, the RAN node may be a radio controller in a cloud radio access network (cloud radio access network, CRAN) scenario. Alternatively, the RAN node may be a central unit (central unit, CU), a distributed unit (distributed unit, DU), a CU-control plane (control plane, CP), a CU-user plane (user plane, UP), a radio unit (radio unit, RU), a roadside unit (roadside unit, RSU) that has a base station function, a wired access gateway, a core network element, or the like. Alternatively, the RAN node may be a server, a wearable device, a machine communication device, a vehicle-mounted device, or the like. For example, the RAN node in a V2X technology may be an RSU. An example in which the RAN node is a base station is used below for description. A plurality of RAN nodes may be base stations of a same type, or may be base stations of different types. The base station may communicate with the terminal, or may communicate with the terminal through a relay station. The terminal may communicate with a plurality of base stations using different technologies. For example, the terminal may communicate with a base station supporting an LTE network, or may communicate with a base station supporting a 5G network, or may support dual connectivity to a base station in an LTE network and a base station in a 5G network.

In this application, the CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH). It may be understood that the CU may be classified as a RAN node in an access network, or the CU may be classified as a RAN node in a core network. This is not limited herein.

In different systems, the CU (or the CU-CP and the CU-UP), the DU, or the RU may also have different names, but a person skilled in the art may understand meanings thereof. For example, in an open radio access network (open radio access network, ORAN) system, the CU may alternatively be referred to as an O-CU (open CU), the DU may alternatively be referred to as an O-DU, the CU-CP may alternatively be referred to as an O-CU-CP, the CU-UP may alternatively be referred to as an O-CU-UP, and the RU may alternatively be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module.

In this application, a form of the radio access network node is not limited. An apparatus configured to implement a function of the radio access network node may be a radio access network node, or may be an apparatus that can support the radio access network node in implementing the function, for example, a chip system. The apparatus may be installed in the radio access network node or used together with the radio access network node.

Optionally, the modules (for example, the radio access network node 101, the terminal 102, or the terminal 103) in FIG. 1 of this application may also be referred to as a communication apparatus, and may be a general-purpose device or a dedicated device. This is not specifically limited in this application.

Optionally, related functions of the modules (for example, the radio access network node 101, the terminal 102, or the terminal 103) in FIG. 1 of this application may be implemented by one device, may be jointly implemented by a plurality of devices, or may be implemented by one or more functional modules in one device. This is not specifically limited in this application. It may be understood that the foregoing function may be a network element in a hardware device, or may be a software function running on dedicated hardware, or a combination of hardware and software, or a virtualization function instantiated on a platform (for example, a cloud platform).

During specific implementation, all the modules (for example, the radio access network node 101, the terminal 102, or the terminal 103) in FIG. 1 of this application may use a composition structure shown in FIG. 2, or include components shown in FIG. 2. FIG. 2 is a diagram of a hardware structure of a communication apparatus applicable to this application. The communication apparatus 20 includes at least one processor 201 and at least one communication interface 204, to implement the method provided in this application. The communication apparatus 20 may further include a communication line 202 and a storage 203.

The processor 201 may be a general-purpose central processing unit (central processing unit, CPU), a microprocessor, an application-specific integrated circuit (application-specific integrated circuit, ASIC), or one or more integrated circuits configured to control execution of programs in the solutions in this application.

The communication line 202 may include a channel like a bus for transmission of information between the foregoing components.

The communication interface 204 is configured to communicate with another device or a communication network. The communication interface 204 may be any apparatus like a transceiver, for example, may be an Ethernet interface, a radio access network (radio access network, RAN) interface, a wireless local area network (wireless local area network, WLAN) interface, a transceiver, a pin, a bus, an interface circuit, or a transceiver circuit.

The storage 203 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in an instruction form or a data structure form and can be accessed by a computer, but is not limited thereto. The storage may exist independently, and is coupled to the processor 201 through the communication line 202. The storage 203 may alternatively be integrated with the processor 201. Usually, the storage provided in this application may be non-volatile.

The storage 203 is configured to store computer-executable instructions for performing the solutions provided in this application, and the processor 201 controls execution of the computer-executable instructions. The processor 201 is configured to execute the computer-executable instructions stored in the storage 203, to implement the method provided in this application. Alternatively, optionally, in this application, the processor 201 may perform a processing-related function in the following method in this application, and the communication interface 204 is responsible for communicating with another device or a communication network. This is not specifically limited in this application.

Optionally, the computer-executable instructions in this application may also be referred to as application program code. This is not specifically limited in this application.

The coupling in this application may be an indirect coupling or a communication connection between apparatuses, units, or modules in an electrical form, a mechanical form, or another form, and is used for information exchange between the apparatuses, the units, or the modules.

In an embodiment, the processor 201 may include one or more CPUs, for example, a CPU 0 and a CPU 1 in FIG. 2.

In an embodiment, the communication apparatus 20 may include a plurality of processors, for example, the processor 201 and a processor 207 in FIG. 2. Each of the processors may be a single-core (single-CPU) processor, or may be a multi-core (multi-CPU) processor. The processor herein may be one or more devices, circuits, and/or processing cores configured to process data (for example, computer program instructions).

In an embodiment, the communication apparatus 20 may further include an output device 205 and/or an input device 206. The output device 205 is coupled to the processor 201, and may display information in a plurality of manners. For example, the output device 205 may be a liquid crystal display (liquid crystal display, LCD), a light emitting diode (light emitting diode, LED) display device, a cathode ray tube (cathode ray tube, CRT) display device, or a projector (projector). The input device 206 is coupled to the processor 201, and may receive an input of a user in a plurality of manners. For example, the input device 206 may be a mouse, a keyboard, a touchscreen device, or a sensor device.

It may be understood that, a composition structure shown in FIG. 2 does not constitute a limitation on the communication apparatus. In addition to the components shown in FIG. 2, the communication apparatus may include more or fewer components than those shown in the figure, some components may be combined, or different component arrangements may be used.

The following describes the method provided in this application with reference to the accompanying drawings. Modules in the following embodiments may have the components shown in FIG. 2. Details are not described again.

It may be understood that names of messages between the modules, names of parameters in the messages, or the like in the following embodiments of this application are merely examples, and there may alternatively be other names during specific implementation. This is not specifically limited in this application.

It may be understood that, in this application, "/" may indicate an "or" relationship between associated objects. For example, A/B may indicate A or B. "And/or" may be used to describe three relationships between associated objects. For example, A and/or B may indicate three cases: Only A exists, both A and B exist, and only B exists. A and B may be singular or plural. In addition, a representation similar to "at least one of A, B, and C" or "at least one of A, B, or C" is usually used to represent any one of the following: Only A exists; only B exists; only C exists; both A and B exist; both A and C exist; both B and C exist; and A, B, and C all exist. The foregoing uses three elements A, B, and C as an example to describe an optional item of the project. When there are more elements in the representation, a meaning of the representation may be obtained according to the foregoing rules.

For ease of description of the technical solutions of this application, in this application, words such as "first" and "second" may be used to distinguish between technical features with a same function or similar functions. The words such as "first" and "second" do not limit a quantity and an execution sequence, and the words such as "first" and "second" do not limit a definite difference. In this application, a word like "example" or "for example" is used to represent giving an example, an illustration, or a description. Any embodiment or design solution described as "example" or "for example" should not be explained as being more preferred or having more advantages than another embodiment or design solution. The word like "example" or "for example" is used to present a related concept in a specific manner for ease of understanding.

It may be understood that an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner. It may be understood that sequence numbers of processes do not mean execution sequences in various embodiments of this application. The execution sequences of the processes should be determined based on functions and internal logic of the processes, and should not be construed as any limitation on implementation processes of this application.

It may be understood that, in this application, "indicate" may include a direct indication and an indirect indication, or may include an explicit indication and an implicit indication. When a piece of indication information indicates A, the indication information may directly indicate A or indirectly indicate A, but it does not indicate that the indication information definitely carries A. Information indicated by a piece of information (for example, first indication information described below) is referred to as to-be-indicated information. In this case, in a specific implementation process, the to-be-indicated information is indicated in a plurality of manners. By way of example, and not limitation, the to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

It may be understood that in this application, "when ...", "in a case of ...", "provided that", and "if" all mean that corresponding processing is performed in an objective case, and are not intended to limit time, do not require a determining action during implementation, and do not mean that there is another limitation.

It may be understood that in some scenarios, some optional features in this application may be independently implemented without depending on other features, for example, a solution on which the optional features are currently based, to resolve a corresponding technical problem and achieve corresponding effects. Alternatively, in some scenarios, the optional features may be combined with other features based on a requirement. Correspondingly, an apparatus provided in this application may also correspondingly implement these features or functions. Details are not described herein.

It may be understood that, in this application, a same step, or steps or technical features that have a same function may be mutually referenced between different embodiments.

It may be understood that in this application, the radio access network node and/or the terminal may perform a part or all of the steps in this application. These steps are merely examples. In this application, other steps or variations of various steps may be further performed. In addition, the steps may be performed in a sequence different from a sequence presented in this application, and not all steps in this application need to be performed.

It may be understood that in the following method provided in this application, an example in which the radio access network node and the terminal are used as execution bodies of an interaction example is used to illustrate the method. However, an execution body of the interaction example is not limited in this application. For example, the radio access network node in the method provided in the following embodiments of this application may alternatively be a chip, a chip system, or a processor that supports the radio access network node in implementing the method, or may be a logical node, a logical module, or software that can implement all or a part of radio access network nodes. The terminal in the method provided in this application may alternatively be a chip, a chip system, or a processor that supports the terminal in implementing the method, or may be a logical node, a logical module, or software that can implement all or a part of terminals.

FIG. 3 shows a configuration method according to this application. The method may include the following steps.

S301: A terminal sends carrier aggregation capability information of the terminal to a radio access network node. Correspondingly, the radio access network node receives the carrier aggregation capability information of the terminal from the terminal.

In this application, the terminal may be the terminal 102 or the terminal 103 in the communication system 10 shown in FIG. 1. The radio access network node may be the radio access network node 101 in the communication system 10 shown in FIG. 1.

In a possible implementation, the carrier aggregation capability information of the terminal is used by the terminal to report a carrier aggregation capability of the terminal to the radio access network node. For example, the carrier aggregation capability information of the terminal indicates that the terminal supports joint data transmission on N1 first carriers, where a bandwidth of the first carrier is less than or equal to a first bandwidth, and N1 is an integer greater than 1.

In this application, the N1 first carriers may be carriers in a same frequency band. For example, the N1 first carriers are N1 carriers that are contiguous in frequency domain in a band 1, or are N1 carriers that are non-contiguous in frequency domain in a band 1. The "non-contiguous in frequency domain" herein means that at least two of the N1 first carriers are non-contiguous in frequency domain. Alternatively, the N1 first carriers are carriers in different frequency bands. For example, a part of the N1 first carriers are in the band 1, and the other carriers are in a band 2. It may be understood that, when the N1 first carriers are carriers that are contiguous in frequency domain in a same frequency band, for a manner in which the terminal reports the carrier aggregation capability of the terminal to the radio access network node, refer to the foregoing manner in which the terminal reports the intra-band contiguous carrier aggregation capability. When the N1 first carriers are carriers that are non-contiguous in frequency domain in a same frequency band, for a manner in which the terminal reports the carrier aggregation capability of the terminal to the radio access network node, refer to the foregoing manner in which the terminal reports the intra-band non-contiguous carrier aggregation capability. When the N1 first carriers are carriers in different frequency bands, for a manner in which the terminal reports the carrier aggregation capability of the terminal to the radio access network node, refer to the foregoing manner in which the terminal reports the inter-band carrier aggregation capability.

Optionally, the carrier aggregation capability information of the terminal may be carried in terminal capability information (UE capability information). It may be understood that because different terminals have different software and hardware configurations, the terminal may send the terminal capability information to the radio access network node after establishing a connection to the radio access network node, so that the radio access network node performs appropriate configuration for the terminal. The terminal capability information may include the carrier aggregation capability information of the terminal. Specifically, the radio access network node may obtain the carrier aggregation capability information of the terminal based on a field CA-BandwidthClassNR of signaling, where a value of CA-BandwidthClassNR may be A, B, C, D, E, F, G, H, I, J, K, L, M, N, O, or the like, and each letter corresponds to a different CA bandwidth class. For example, the radio access network node may determine the carrier aggregation capability of the terminal by querying Table 3.

Optionally, the first bandwidth may be less than or equal to 400 MHz and greater than or equal to 200 MHz. For example, the first bandwidth is 400 MHz or 300 MHz. Alternatively, the first bandwidth may be another value. This is not limited. For example, in this application, the bandwidth of the first carrier is less than the first bandwidth. Therefore, the first carrier may be considered as a small-bandwidth CC.

Optionally, the carrier aggregation capability information of the terminal further indicates that the terminal supports joint data transmission on M1 second carriers. M1 is an integer greater than 1. In other words, the terminal may support joint data transmission on the N1 first carriers, or support joint data transmission on the M1 second carriers. A bandwidth of the second carrier is greater than or equal to a second bandwidth, and the second bandwidth is greater than or equal to the first bandwidth. For example, the first bandwidth is 400 MHz, and the second bandwidth is 500 MHz; or the first bandwidth is 200 MHz, and the second bandwidth is 300 MHz.

In this application, the M1 second carriers may be carriers in a same frequency band. Alternatively, the M1 second carriers are carriers in different frequency bands. For details, refer to the foregoing descriptions of the N1 first carriers. The M1 second carriers and the N1 first carriers may be carriers in a same frequency band or carriers in different frequency bands. The M1 second carriers and the N1 first carriers may be contiguous in frequency domain, or may be non-contiguous in frequency domain. This is not limited.

In this application, the bandwidth of the second carrier is greater than or equal to the second bandwidth. Therefore, the second carrier may be considered as a large-bandwidth CC.

S302: The radio access network node sends carrier aggregation configuration information to the terminal. Correspondingly, the terminal receives the carrier aggregation configuration information from the radio access network node.

The carrier aggregation configuration information is used to configure a first frequency domain resource, and the first frequency domain resource includes frequency domain resources occupied by M2 second carriers. Optionally, the first frequency domain resource further includes frequency domain resources occupied by N2 first carriers, and N2 is a positive integer.

Optionally, the carrier aggregation configuration information is carried in RRC signaling (for example, an RRC reconfiguration (RRC Reconfiguration) message). For example, a field SCS-SpecificCarrier in a field sCelltoAddModList included in the RRC reconfiguration message is used to configure the first frequency domain resource.

It may be understood that the carrier aggregation configuration information is determined based on the carrier aggregation capability information of the terminal. The following uses the following four scenarios as examples for description.

Scenario 1: The carrier aggregation capability information of the terminal indicates that the terminal supports joint data transmission on the N1 first carriers, and the carrier aggregation configuration information is used to configure the frequency domain resources occupied by the M2 second carriers.

It may be understood that, in Scenario 1, the terminal reports that the terminal supports joint data transmission on the N1 first carriers, and the radio access network node configures that the terminal performs joint data transmission on the M2 second carriers. However, the bandwidth of the second carrier is different from the bandwidth of the first carrier. Therefore, the radio access network node may convert a carrier aggregation capability that is for the first carrier and reported by the terminal into a carrier aggregation capability of the terminal for the second carrier, to configure, based on the carrier aggregation capability of the terminal for the second carrier, a specific quantity of second carriers on which the terminal performs joint data transmission.

In a possible implementation, the radio access network node may convert, by querying a table (for example, based on Table 4, Table 5, or Table 6 below), the carrier aggregation capability that is for the first carrier and reported by the terminal into the carrier aggregation capability of the terminal for the second carrier. The foregoing process may be understood as how to determine a value of M2 based on a value of N1. The following separately describes Method 1, Method 2, and Method 3.

Method 1: The value of M2 is related to N1.

Table 4 shows a correspondence between N1 and M2. In this way, M2 may be determined based on N1.

**Table 4**

| N1 | M2 |
|---|---|
| 1 to 4 | 1 |
| 5 to 8 | 2 |
| 9 to 12 | 3 |
| 13 to 16 | 4 |

It can be learned from the second row in Table 4 that when N1 is any integer in 1 to 4, M2 may be 1. When N1 is any integer in 5 to 8, M2 may be 2. When N1 is any integer in 9 to 12, M2 may be 3. When N1 is any integer in 13 to 16, M2 may be 4.

Method 2: The value of M2 is related to N1 and a subcarrier spacing.

Table 5 shows a correspondence between N1, M2, and the SCS. In Table 5, values 1 to 16 in the first row correspond to values of N1, 15 kHz to 60 kHz in the first column are values of the subcarrier spacing, and the rest are values of M2.

**Table 5**

| SCS\N1 | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| 15 kHz | 1 | 1 | 1 | 1 | 1 | 1 | 1 | 1 | 2 | 2 | 2 | 2 | 2 | 2 | 2 | 2 |
| 30 kHz | 1 | 1 | 1 | 1 | 2 | 2 | 2 | 2 | 3 | 3 | 3 | 3 | 4 | 4 | 4 | 4 |
| 60 kHz | 1 | 1 | 2 | 2 | 3 | 3 | 4 | 4 | 5 | 5 | 6 | 6 | 7 | 7 | 8 | 8 |

It can be learned from Table 5 that, when the SCS = 15 kHz and N1 = 16 (namely, the intersection point of the second row and the last column), M2 may be 2. When the SCS = 30 kHz, and N1 = 13 (namely, the intersection point between the third row and the column in which N1 = 13), M2 may be 4. When the SCS = 60 kHz, and N1 = 6 (namely, the intersection point between the fourth row and the column in which N1 = 6), M2 may be 3.

In Table 5, when N1 or the SCS has another value, the value of M2 may be obtained according to a method similar to the foregoing example. Details are not described again.

Method 3: The value of M2 is related to N1 and an operating band of the terminal.

Table 6 shows a correspondence between N1, M2, and the operating band of the terminal. In Table 6, values 1 to 16 in the first row correspond to values of N1, the first column indicates that the operating band of the terminal is in an FR 1 or an FR 2, and the rest are values of M2.

**Table 6**

| N1 | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| FR 1 | 1 | 1 | 1 | 1 | 2 | 2 | 2 | 2 | 3 | 3 | 3 | 3 | 4 | 4 | 4 | 4 |
| FR 2 | 1 | 1 | 1 | 1 | 1 | 1 | 1 | 1 | 2 | 2 | 2 | 2 | 2 | 2 | 2 | 2 |

It can be learned from Table 6 that when the operating band of the terminal is in the FR 1, N1 = 6 (namely, the intersection point of the fourth row and the column in which N1 = 6), M2 may be 2. When the operating band of the terminal is in the FR 2, N1 = 1 (namely, the intersection point of the fourth row and the column in which N1 = 1), M2 may be 2.

It may be understood that Method 1 to Method 3 are merely examples of determining M2. In a specific application, M2 may alternatively be determined in another manner. For example, the value of M2 may be related to N1, the operating band, and the subcarrier spacing. In addition, Table 4 to Table 6 are also examples. In a specific application, Table 4 to Table 6 may alternatively be in other forms. This is not limited.

In another possible implementation, M2 is related to a first value *R*. The first value is a ratio of a fourth bandwidth to a third bandwidth, or the first value is configured by the radio access network node. M2 (corresponding to the following *M*₂), N1 (corresponding to the following *N*₁), and *R*' may satisfy the following relationship: ${M}_{2} ⋅ R \leq {N}_{1}$ (1)

In a possible design, the third bandwidth is determined based on the bandwidth of the second carrier. For example, if the second carrier corresponds to one bandwidth, the third bandwidth is greater than or equal to the bandwidth corresponding to the second carrier. If the second carrier corresponds to a plurality of bandwidths, the third bandwidth is one of the plurality of bandwidths. For example, the third bandwidth is a smallest bandwidth of the plurality of bandwidths, an average value of the plurality of bandwidths, a largest bandwidth of the plurality of bandwidths, or a median of the plurality of bandwidths. The fourth bandwidth is determined based on the bandwidth of the first carrier. For example, the fourth bandwidth is determined based on bandwidths of the N1 first carriers. For example, the fourth bandwidth is a largest bandwidth of the bandwidths of the N1 first carriers, a smallest bandwidth of the bandwidths of the N1 first carriers, an average value of the bandwidths of the N1 first carriers, or a median of the bandwidths of the N1 first carriers. Alternatively, the third bandwidth and/or the fourth bandwidth are/is configured by the radio access network node, or are/is defined in a protocol.

Optionally, specific values of the third bandwidth and the fourth bandwidth are related to the subcarrier spacing. In other words, for different corresponding carriers, the third bandwidth and the fourth bandwidth may have different values. For example, for a carrier with a subcarrier spacing of 15 kHz, the third bandwidth is 50 MHz, and the fourth bandwidth is 200 MHz. In this case, the first value is 4. For a carrier with a subcarrier spacing of 30 kHz, the third bandwidth is 100 MHz, and the fourth bandwidth is 400 MHz. In this case, the first value is 4. For another example, for a carrier with a subcarrier spacing of 15 kHz, the third bandwidth is 50 MHz, and the fourth bandwidth is 400 MHz. In this case, the first value is 8. For a carrier with a subcarrier spacing of 30 kHz, the third bandwidth is 100 MHz, and the fourth bandwidth is 400 MHz. In this case, the first value is 4.

Optionally, the specific values of the third bandwidth and the fourth bandwidth are related to a parameter of the operating band (operating band) of the terminal. In other words, for carriers in different operating bands, the third bandwidth and the fourth bandwidth may have different values. For example, for a carrier in the FR 1 frequency band, the third bandwidth is 50 MHz, and the fourth bandwidth is 200 MHz. In this case, the first value is 4. For a carrier in the FR 2 frequency band, the third bandwidth is 200 MHz, and the fourth bandwidth is 800 MHz. In this case, the first value is 4. For another example, for a carrier in the FR 1 frequency band, the third bandwidth is 50 MHz, and the fourth bandwidth is 400 MHz. In this case, the first value is 8. For a carrier in the FR 2 frequency band, the third bandwidth is 200 MHz, and the fourth bandwidth is 800 MHz. In this case, the first value is 4.

Optionally, M2 is further related to a first factor of proportionality *S*, and the first factor of proportionality is greater than 1, or the first factor of proportionality is greater than 0 and less than 1. For example, M2, N1, *R*, and *S* may satisfy the following relationship: ${M}_{2} ⋅ R ⋅ S \leq {N}_{1}$ (2)

In this application, a function of the first factor of proportionality is to adjust a quantity of second carriers and a quantity of first carriers in a carrier aggregation manner of the second carrier and the first carrier based on a status of compatibility of a communication system with large-bandwidth transmission. For example, if the communication system has high compatibility with the large-bandwidth transmission, and a large-bandwidth system is optimized compared with a small-bandwidth system in terms of control signaling, a scheduling procedure, an encoding/decoding scheme, modulation/demodulation, and the like, the first factor of proportionality is greater than 0 and less than 1, and the quantity of second carriers is large. If the communication system has low compatibility with the large-bandwidth transmission, a large-bandwidth system is less optimized than a small-bandwidth system in terms of control signaling, a scheduling procedure, an encoding/decoding scheme, modulation/demodulation, the first factor of proportionality is greater than 1, and the quantity of second carriers is small. The compatibility of the communication system with the large-bandwidth transmission includes compatibility of the terminal with the large-bandwidth transmission, and/or compatibility of the radio access network node with the large-bandwidth transmission. The compatibility of the terminal with the large-bandwidth transmission is related to a baseband processing capability of the terminal, a modulation and demodulation capability of the terminal, and/or the like. Similarly, the compatibility of the radio access network node with the large-bandwidth transmission is related to a baseband processing capability of the radio access network node, a modulation and demodulation capability of the the radio access network node, and/or the like.

Optionally, the terminal sends first indication information to the radio access network node, where the first indication information indicates the first factor of proportionality. In this way, the radio access network node may determine the first factor of proportionality based on the first indication information.

Scenario 2: The carrier aggregation capability information of the terminal indicates that the terminal supports joint data transmission on the N1 first carriers, and the carrier aggregation configuration information is used to configure the frequency domain resources occupied by the M2 second carriers and the frequency domain resources occupied by the N2 first carriers.

It may be understood that, in Scenario 2, the terminal reports that the terminal supports joint data transmission on the N1 first carriers, and the radio access network node configures that the terminal performs joint data transmission on the M2 second carriers and the N2 first carriers. However, the bandwidth of the second carrier is different from the bandwidth of the first carrier. Therefore, the radio access network node may convert a carrier aggregation capability that is for the first carrier and reported by the terminal into a carrier aggregation capability of the terminal for the second carrier and the first carrier, to configure, based on the carrier aggregation capability of the terminal for the second carrier and the first carrier, a specific quantity of second carriers and a specific quantity of first carriers on which the terminal performs joint data transmission.

Optionally, N2 and M2 are related to a first value *R*. For descriptions of the first value, refer to the corresponding descriptions in Scenario 1. For example, M2 (corresponding to the following *M*₂), N2 (corresponding to the following *N*₂), *R*, and N1 (corresponding to the following *N*₁) may satisfy the following relationship: ${N}_{2} + {M}_{2} ⋅ R \leq {N}_{1}$ (3)

In Formula (3), an example in which the N1 first carriers are carriers in the band 1 is used for description. *N*₂ is a quantity of aggregated first carriers configured by the radio access network node for the terminal in the band 1, and *M*₂ is a quantity of aggregated second carriers configured by the radio access network node for the terminal in the band 1. If the bandwidth of the first carrier is 100 MHz, the bandwidth of the second carrier is 400 MHz, and *N*₁ is 6, R = 400 MHz/100 MHz = 4. Therefore, for the band 1, the radio access network node may configure *N*₂ = 2 an *M*₂ = 1 or *N*₂ = *M*₂ = 1.

Optionally, N2 and M2 are further related to a first factor of proportionality *S*, and the first factor of proportionality is greater than 1, or the first factor of proportionality is greater than 0 and less than 1. For specific descriptions of the first factor of proportionality, refer to the foregoing descriptions in Scenario 1. For example, M2 (corresponding to the following *M*₂), N2 (corresponding to the following *N*₂), *R*, N1 (corresponding to the following *N*₁), and *S* may satisfy the following relationship: ${N}_{2} + {M}_{2} ⋅ R ⋅ S \leq {N}_{1}$ (4)

Optionally, the terminal performs carrier aggregation transmission based on the carrier aggregation configuration information. If a quantity of first carriers and/or a quantity of second carriers configured by using the carrier aggregation configuration information do not/does not satisfy a limitation of Formula (4), that is, if a calculated value of *N*₂ + *M*₂ · *R* · *S* is greater than a value of *N*₁ reported by the terminal, the terminal may consider that a radio access network configuration is incorrect, and performs a further operation. For example, the terminal may release an RRC connection. Alternatively, because one CC corresponds to one secondary cell (secondary cell, SCell), the terminal may perform carrier aggregation configuration in ascending order of cell identities based on a cell identity (cell Identity) corresponding to each first carrier, or the terminal may perform carrier aggregation configuration in ascending order of all carrier bandwidths corresponding to the first carriers and the second carriers. This is not limited.

Optionally, the terminal may send first indication information to the radio access network node, to indicate the first factor of proportionality.

Scenario 3: The carrier aggregation capability information of the terminal indicates that the terminal supports joint data transmission on the N1 first carriers, or supports joint data transmission on the M1 second carriers, and the carrier aggregation configuration information is used to configure the frequency domain resources occupied by the M2 second carriers.

It may be understood that, in Scenario 3, the terminal reports that the terminal supports joint data transmission on the N1 first carriers, or supports joint data transmission on the M1 second carriers, and the radio access network node configures that the terminal performs joint data transmission on the M2 second carriers. However, the bandwidth of the second carrier is different from the bandwidth of the first carrier. Therefore, the radio access network node may configure, based on a carrier aggregation capability for the first carrier and/or a carrier aggregation capability for the second carrier that are/is reported by the terminal, that the terminal performs joint data transmission on the M2 second carriers. The following provides detailed descriptions.

In a possible implementation, the radio access network node may convert the carrier aggregation capability for the first carrier reported by the terminal into the carrier aggregation capability of the terminal for the second carrier, and then configure, based on the carrier aggregation capability of the terminal for the second carrier, a specific quantity of second carriers on which the terminal performs joint data transmission. For details, refer to the descriptions corresponding to Scenario 1. Different from Scenario 1, the third bandwidth may alternatively be determined based on bandwidths of the M1 second carriers. For example, the third bandwidth may be a largest bandwidth of the bandwidths of the M1 second carriers, a smallest bandwidth of the bandwidths of the M1 second carriers, an average value of the bandwidths of the M1 second carriers, or a median of the bandwidths of the M1 second carriers.

In another possible implementation, the radio access network node may configure, based on the carrier aggregation capability of the terminal for the second carrier, that the terminal performs joint data transmission on the M2 second carriers. M2 is less than or equal to M1.

Scenario 4: The carrier aggregation capability information of the terminal indicates that the terminal supports joint data transmission on the N1 first carriers, or supports joint data transmission on the M1 second carriers, and the carrier aggregation configuration information is used to configure the frequency domain resources occupied by the M2 second carriers and the frequency domain resources occupied by the N2 first carriers.

It may be understood that, in Scenario 4, the terminal reports that the terminal supports joint data transmission on the N1 first carriers, or supports joint data transmission on the M1 second carriers, and the radio access network node configures that the terminal performs joint data transmission on the M2 second carriers and the N2 first carriers. However, the bandwidth of the second carrier is different from the bandwidth of the first carrier. Therefore, the radio access network node may configure, based on a carrier aggregation capability that is for the first carrier and reported by the terminal or a carrier aggregation capability that is for the second carrier and reported by the terminal, that the terminal performs joint data transmission on the M2 second carriers and the N2 first carriers. The following provides detailed descriptions.

In a possible implementation, the radio access network node converts the carrier aggregation capability that is for the first carrier and reported by the terminal into a carrier aggregation capability of the terminal for the second carrier and the first carrier, and then configures, based on the carrier aggregation capability of the terminal for the second carrier and the first carrier, that the terminal performs joint data transmission on the M2 second carriers and the N2 first carriers. For details, refer to the foregoing descriptions corresponding to Scenario 2. Different from Scenario 2, the third bandwidth may alternatively be determined based on bandwidths of the M1 second carriers. For example, the third bandwidth is a largest bandwidth of the bandwidths of the M1 second carriers, a smallest bandwidth of the bandwidths of the M1 second carriers, an average value of the bandwidths of the M1 second carriers, or a median of the bandwidths of the M1 second carriers.

In another possible implementation, the radio access network node converts the carrier aggregation capability that is for the second carrier and reported by the terminal into a carrier aggregation capability of the terminal for the second carrier and the first carrier, and then configures, based on the carrier aggregation capability of the terminal for the second carrier and the first carrier, that the terminal performs joint data transmission on the M2 second carriers and the N2 first carriers.

In a possible design, M2 and N2 are related to a second value *R*'. The second value is a ratio of a third bandwidth to a fourth bandwidth, or the second value is configured by the radio access network node. For example, M2 (corresponding to the following *M*₂), N2 (corresponding to the following *N*₂), and *R*' may satisfy the following relationship: ${M}_{2} + {N}_{2} ⋅ R ′ \leq {M}_{1}$ (5)

Optionally, M2 and N2 are further related to a second factor of proportionality *S*'. For example, M2, N2, N1, *R*', and *S*' may satisfy the following relationship: ${M}_{2} + {N}_{2} ⋅ R ′ ⋅ S ′ \leq {M}_{1}$ (6)

Optionally, the second factor of proportionality is greater than 1, or the second factor of proportionality is greater than 0 and less than 1. A function of the second factor of proportionality is to adjust a quantity of second carriers and a quantity of first carriers in a carrier aggregation manner of the second carrier and the first carrier based on a status of compatibility of a communication system with large-bandwidth transmission. For example, if the compatibility of the communication system with large-bandwidth transmission is high, the second factor of proportionality is greater than 1, and the quantity of second carriers is small. If the compatibility of the communication system with large-bandwidth transmission is low, the second factor of proportionality is greater than 0 and less than 1, and the quantity of second carriers is large.

Optionally, the terminal sends second indication information to the radio access network node, where the second indication information indicates the second factor of proportionality. In this way, the radio access network node may determine the second factor of proportionality based on the second indication information.

In a possible design, the third bandwidth is determined based on the bandwidth of the second carrier. For example, the third bandwidth is determined based on bandwidths of the M1 second carriers. For example, the third bandwidth is a largest bandwidth of the bandwidths of the M1 second carriers, a smallest bandwidth of the bandwidths of the M1 second carriers, an average value of the bandwidths of the M1 second carriers, or a median of the bandwidths of the M1 second carriers. The fourth bandwidth is determined based on the bandwidth of the first carrier. For example, the fourth bandwidth is determined based on bandwidths of the N1 first carriers. For example, the fourth bandwidth is a largest bandwidth of the bandwidths of the N1 first carriers, a smallest bandwidth of the bandwidths of the N1 first carriers, an average value of the bandwidths of the N1 first carriers, or a median of the bandwidths of the N1 first carriers. Alternatively, the third bandwidth and/or the fourth bandwidth are/is configured by the radio access network node, or are/is defined in a protocol.

It may be understood that, in addition to the foregoing scenarios, the terminal may alternatively report that the terminal supports joint data transmission on the N1 first carriers. The first frequency domain resource configured by the radio access network node includes frequency domain resources occupied by N3 first carriers, and N3 is less than or equal to N1. Alternatively, the terminal may report that the terminal supports joint data transmission on the M1 second carriers. The first frequency domain resource configured by the radio access network node includes frequency domain resources occupied by M3 second carriers, and M3 is less than or equal to M1. Alternatively, the terminal may report that the terminal supports joint data transmission on the M1 second carriers. The first frequency domain resource configured by the radio access network node includes frequency domain resources occupied by N4 first carriers, and N4 is related to R'. For example, M1 (corresponding to the following *M*₁), N4 (corresponding to the following *N*₄), and *R*' may satisfy the following relationship: ${N}_{4} ⋅ R ′ \leq {M}_{1}$ (7)

Optionally, M2 is further related to a second factor of proportionality *S*'. For example, M1, N4, *R*', and the second factor of proportionality *S*' may satisfy the following relationship: ${N}_{4} ⋅ R ′ ⋅ S ′ \leq {M}_{1}$ (8)

Optionally, the second factor of proportionality is greater than 1, or the second factor of proportionality is greater than 0 and less than 1. A function of the second factor of proportionality is to adjust a quantity of second carriers and a quantity of first carriers in a carrier aggregation manner of the second carrier and the first carrier based on a status of compatibility of a communication system with large-bandwidth transmission.

Optionally, the terminal sends second indication information to the radio access network node, where the second indication information indicates the second factor of proportionality. In this way, the radio access network node may determine the second factor of proportionality based on the second indication information.

S303: The terminal communicates with the radio access network node on the first frequency domain resource configured by using the carrier aggregation configuration information.

In a possible implementation, the terminal sends data to the radio access network node on the first frequency domain resource by using a carrier aggregation technology. Correspondingly, the radio access network node receives the data from the terminal on the first frequency domain resource. Alternatively, the radio access network node sends data to the terminal on the first frequency domain resource by using a carrier aggregation technology. Correspondingly, the terminal receives the data from the radio access network node on the first frequency domain resource. The following uses an example in which the terminal sends data to the radio access network node on the first frequency domain resource by using the carrier aggregation technology for description.

For example, in Scenario 1 or Scenario 3, the terminal simultaneously sends data to the radio access network node on the frequency domain resources occupied by the M2 second carriers. In Scenario 2 or Scenario 4, the terminal sends data to the radio access network node on both the frequency domain resources occupied by the M2 second carriers and the frequency domain resources occupied by the N2 first carriers.

According to the method shown in FIG. 3, the terminal may send the carrier aggregation capability information, so that an apparatus that receives the carrier aggregation capability information, for example, the radio access network node, can determine the carrier aggregation capability of the terminal for the first carrier, determine the carrier aggregation capability of the terminal for the second carrier based on the carrier aggregation capability of the terminal for the first carrier, and configure, based on the carrier aggregation capability of the terminal for the second carrier, specific second carriers on which the terminal transmits data.

FIG. 4 shows another configuration method according to this application. The communication method may include the following steps.

S401: A terminal sends carrier aggregation capability information of the terminal to a radio access network node. Correspondingly, the radio access network node receives the carrier aggregation capability information of the terminal from the terminal.

In this application, the terminal may be the terminal 102 or the terminal 103 in the communication system 10 shown in FIG. 1. The radio access network node may be the radio access network node 101 in the communication system 10 shown in FIG. 1.

In a possible implementation, the carrier aggregation capability information indicates at least one aggregation manner of the first carrier and the second carrier, and the at least one aggregation manner may be determined based on a hardware condition of the terminal, for example, radio frequency performance or a baseband processing capability of the terminal. A bandwidth of the first carrier is less than or equal to a first bandwidth, a bandwidth of the second carrier is greater than or equal to a second bandwidth, and the second bandwidth is greater than or equal to the first bandwidth. For other descriptions of the first bandwidth and the second bandwidth, refer to the method shown in FIG. 3. Details are not described again.

For example, the carrier aggregation capability information indicates one aggregation manner, for example, a first aggregation manner. The first aggregation manner indicates that the terminal supports joint data transmission on P2 first carriers and Q2 second carriers. P2 and Q2 are integers, and P2 and Q2 are not both zero.

For example, the carrier aggregation capability information indicates two aggregation manners, for example, a first aggregation manner and a second aggregation manner. The two aggregation manners include the first aggregation manner and the second aggregation manner. The first aggregation manner indicates that the terminal supports joint data transmission on P2 first carriers and Q2 second carriers. The second aggregation manner indicates that the terminal supports joint data transmission on P3 first carriers and Q3 second carriers. P2, Q2, P3, and Q3 are integers, P2 and Q2 are not both zero, and P3 and Q3 are not both zero.

S402: The radio access network node sends carrier aggregation configuration information to the terminal. Correspondingly, the terminal receives the carrier aggregation configuration information from the radio access network node.

In a possible implementation, the carrier aggregation configuration information is used to configure a first frequency domain resource. The first frequency domain resource includes frequency domain resources occupied by P1 first carriers and frequency domain resources occupied by Q1 second carriers. P1 and Q1 are obtained based on the carrier aggregation capability information, and P1 and Q1 are not both 0.

It may be understood that when the carrier aggregation capability information indicates one aggregation manner, for example, the first aggregation manner, the first aggregation manner indicates that the terminal supports joint data transmission on the P2 first carriers and the Q2 second carriers. P2 is an integer greater than or equal to P1, and Q2 is an integer greater than or equal to Q1.

It may be understood that when the carrier aggregation capability information indicates two aggregation manners, for example, the first aggregation manner and the second aggregation manner, the first aggregation manner indicates that the terminal supports joint data transmission on the P2 first carriers and the Q2 second carriers, and the second aggregation manner indicates that the terminal supports joint data transmission on the P3 first carriers and the Q3 second carriers. P3 is an integer greater than or equal to P1, and Q3 is an integer greater than or equal to Q1; or P2 is an integer greater than or equal to P1, and Q2 is an integer greater than or equal to Q1.

For example, P2 = Q2 = 3, and P3 = Q3 = 2. If the terminal reports that the terminal supports non-contiguous carrier aggregation of two first carriers and two second carriers (corresponding to P3 = Q3 = 2), and the terminal reports that the terminal supports non-contiguous carrier aggregation of three first carriers and three second carriers (corresponding to P2 = Q2 = 3), in the two cases, the radio access network node may configure one first carrier and one second carrier for the terminal to perform non-contiguous carrier aggregation, or configure one first carrier and two second carriers for the terminal to perform non-contiguous carrier aggregation, or configure two first carriers and one second carrier for the terminal to perform non-contiguous carrier aggregation, or configure two first carriers and two second carriers for the terminal to perform non-contiguous carrier aggregation, or configure two first carriers and three second carriers for the terminal to perform non-contiguous carrier aggregation. It should be understood that a case of contiguous carrier aggregation is similar. Details are not described again.

It may be understood that, in addition to the first aggregation manner and the second aggregation manner, the at least one aggregation manner may further include more aggregation manners. This is not limited.

S403: The terminal communicates with the radio access network node on the first frequency domain resource configured by using the carrier aggregation configuration information.

In a possible implementation, the terminal sends data to the radio access network node on the first frequency domain resource by using a carrier aggregation technology. Correspondingly, the radio access network node receives the data from the terminal on the first frequency domain resource. Alternatively, the radio access network node sends data to the terminal on the first frequency domain resource by using a carrier aggregation technology. Correspondingly, the terminal receives the data from the radio access network node on the first frequency domain resource. An example in which the terminal sends data to the radio access network node on the first frequency domain resource by using the carrier aggregation technology is used. The terminal sends the data to the radio access network node on both the frequency domain resources occupied by the P1 first carriers and the frequency domain resources occupied by the Q1 second carriers.

According to the method shown in FIG. 4, the terminal determines at least one aggregation manner. To be specific, at least one carrier aggregation group of the first carrier and the second carrier supported by the terminal is reported to the radio access network node by using the carrier aggregation capability information. In this way, the radio access network node may obtain the at least one aggregation manner of the first carrier and the second carrier based on the carrier aggregation capability information of the terminal, and configure frequency domain resources for carrier aggregation for the terminal based on the at least one aggregation manner. In comparison with the method shown in FIG. 3, in the method shown in FIG. 4, a carrier aggregation capability does not need to be converted, and appropriate frequency domain resources can be determined for the terminal more intuitively, so that implementation complexity is reduced.

The foregoing mainly describes the solutions provided in this application from a perspective of interaction between the terminal and the radio access network node. Correspondingly, this application further provides a communication apparatus. The communication apparatus may be the terminal in the foregoing method embodiments, an apparatus including the foregoing terminal, or a component that can be used in the terminal. Alternatively, the communication apparatus may be the radio access network node in the foregoing method embodiments, an apparatus including the foregoing radio access network node, or a component that can be used in the radio access network node. It may be understood that, to implement the foregoing functions, the terminal, the radio access network node, or the like includes corresponding hardware structures and/or software modules for performing the functions. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In this application, the terminal and the radio access network node may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It may be understood that division into the modules in this application is an example, and is merely logical function division. In actual implementation, another division manner may be used.

For example, when functional modules are divided in an integrated manner, FIG. 5 is a diagram of a structure of a communication apparatus 50. The communication apparatus 50 includes an interface module 501 and a processing module 502. The interface module 501 may also be referred to as an interface unit, and is configured to perform a sending operation and a receiving operation. For example, the interface module 501 may be an interface circuit, a transceiver machine, a transceiver, or a communication interface. The processing module 502 may also be referred to as a processing unit, and is configured to perform an operation other than the sending operation and the receiving operation. For example, the processing module 502 may be a processing circuit or a processor.

In some embodiments, the communication apparatus 50 may further include a storage module (not shown in FIG. 5), configured to store program instructions and data.

For example, the communication apparatus 50 is configured to implement a function of the terminal. The communication apparatus 50 is, for example, the terminal in the embodiment shown in FIG. 3.

The interface module 501 is configured to send carrier aggregation capability information of the terminal. The carrier aggregation capability information indicates that the terminal supports joint data transmission on N1 first carriers, where a bandwidth of the first carrier is less than or equal to a first bandwidth, and N1 is an integer greater than 1. For example, the interface module 501 may be configured to perform S301.

The interface module 501 is further configured to receive carrier aggregation configuration information, where the carrier aggregation configuration information is determined based on the carrier aggregation capability information, the carrier aggregation configuration information is used to configure a first frequency domain resource, the first frequency domain resource includes frequency domain resources occupied by M2 second carriers, a bandwidth of the second carrier is greater than or equal to a second bandwidth, the second bandwidth is greater than or equal to the first bandwidth, and M2 is a positive integer. For example, the interface module 501 may be configured to perform S302.

The processing module 502 is configured to communicate with the radio access network node on the first frequency domain resource. For example, the processing module 502 may be configured to perform S303. For example, the processing module 502 may be configured to perform S303.

In a possible implementation, M2 is related to a first value, the first value is a ratio of a fourth bandwidth to a third bandwidth, the third bandwidth is determined based on the bandwidth of the second carrier, and the fourth bandwidth is determined based on the bandwidth of the first carrier; or the first value is configured by the radio access network node.

In a possible implementation, M2 is further related to a first factor of proportionality, and the first factor of proportionality is greater than 1, or the first factor of proportionality is greater than 0 and less than 1.

In a possible implementation, the first frequency domain resource further includes frequency domain resources occupied by N2 first carriers, and N2 is a positive integer.

In a possible implementation, N2 is related to the first value, the first value is the ratio of the fourth bandwidth to the third bandwidth, the third bandwidth is determined based on the bandwidth of the second carrier, and the fourth bandwidth is determined based on the bandwidth of the first carrier; or the first value is configured by the radio access network node.

In a possible implementation, N2 is further related to the first factor of proportionality, and the first factor of proportionality is greater than 1, or the first factor of proportionality is greater than 0 and less than 1.

In a possible implementation, the carrier aggregation capability information further indicates that the terminal supports joint data transmission on M1 second carriers, and M1 is an integer greater than 1.

In a possible implementation, the third bandwidth is a bandwidth of a second carrier with a largest bandwidth in the M1 second carriers, and the fourth bandwidth is a bandwidth of a first carrier with a largest bandwidth in the N1 first carriers.

In a possible implementation, the interface module 501 is further configured to send first indication information, where the first indication information indicates the first factor of proportionality.

When the communication apparatus 50 is configured to implement the function of the terminal, for other functions that can be implemented by the communication apparatus 50, refer to related descriptions in the embodiment shown in FIG. 3. Details are not described again.

Alternatively, for example, the communication apparatus 50 is configured to implement a function of the radio access network node. The communication apparatus 50 is, for example, the radio access network node in the embodiment shown in FIG. 3.

The interface module 501 is configured to receive carrier aggregation capability information of the terminal. The carrier aggregation capability information indicates that the terminal supports joint data transmission on N1 first carriers, where a bandwidth of the first carrier is less than or equal to a first bandwidth, and N1 is an integer greater than 1. For example, the interface module 501 may be configured to perform S301.

The interface module 501 is further configured to send carrier aggregation configuration information. The carrier aggregation configuration information is determined based on the carrier aggregation capability information, the carrier aggregation configuration information is used to configure a first frequency domain resource, the first frequency domain resource includes frequency domain resources occupied by M2 second carriers, a bandwidth of the second carrier is greater than or equal to a second bandwidth, the second bandwidth is greater than or equal to the first bandwidth, and M2 is a positive integer. For example, the interface module 501 may be configured to perform S302.

The processing module 502 is configured to communicate with the terminal on the first frequency domain resource. For example, the processing module 502 may be configured to perform S303.

In a possible implementation, M2 is related to a first value, the first value is a ratio of a fourth bandwidth to a third bandwidth, the third bandwidth is determined based on the bandwidth of the second carrier, and the fourth bandwidth is determined based on the bandwidth of the first carrier; or the first value is configured by the radio access network node.

In a possible implementation, M2 is further related to a first factor of proportionality, and the first factor of proportionality is greater than 1, or the first factor of proportionality is greater than 0 and less than 1.

In a possible implementation, the first frequency domain resource further includes frequency domain resources occupied by N2 first carriers, and N2 is a positive integer.

In a possible implementation, N2 is related to the first value, the first value is the ratio of the fourth bandwidth to the third bandwidth, the third bandwidth is determined based on the bandwidth of the second carrier, and the fourth bandwidth is determined based on the bandwidth of the first carrier; or the first value is configured by the radio access network node.

In a possible implementation, N2 is further related to the first factor of proportionality, and the first factor of proportionality is greater than 1, or the first factor of proportionality is greater than 0 and less than 1.

In a possible implementation, the carrier aggregation capability information further indicates that the terminal supports joint data transmission on M1 second carriers, and M1 is an integer greater than 1.

In a possible implementation, the third bandwidth is a bandwidth of a second carrier with a largest bandwidth in the M1 second carriers, and the fourth bandwidth is a bandwidth of a first carrier with a largest bandwidth in the N1 first carriers.

In a possible implementation, the interface module 501 is further configured to receive first indication information, where the first indication information indicates the first factor of proportionality.

When the communication apparatus 50 is configured to implement the function of the radio access network node, for other functions that can be implemented by the communication apparatus 50, refer to related descriptions in the embodiment shown in FIG. 3. Details are not described again.

Alternatively, for example, the communication apparatus 50 is configured to implement a function of the terminal. The communication apparatus 50 is, for example, the terminal in the embodiment shown in FIG. 4.

The interface module 501 is configured to send carrier aggregation capability information of the terminal. The carrier aggregation capability information indicates at least one aggregation manner of a first carrier and a second carrier. A bandwidth of the first carrier is less than or equal to a first bandwidth, a bandwidth of the second carrier is greater than or equal to a second bandwidth, and the second bandwidth is greater than or equal to the first bandwidth. For example, the interface module 501 may be configured to perform S401.

The interface module 501 is further configured to receive carrier aggregation configuration information. The carrier aggregation configuration information is used to configure a first frequency domain resource. The first frequency domain resource includes frequency domain resources occupied by P1 first carriers and frequency domain resources occupied by Q1 second carriers. P1 and Q1 are obtained based on the carrier aggregation capability information, and P1 and Q1 are not both 0. For example, the interface module 501 may be configured to perform S402.

The processing module 502 is configured to communicate with the radio access network node on the first frequency domain resource. The carrier aggregation configuration information is used to configure the first frequency domain resource. The first frequency domain resource includes the frequency domain resources occupied by the P1 first carriers and the frequency domain resources occupied by the Q1 second carriers. P1 and Q1 are obtained based on the carrier aggregation capability information, and P1 and Q1 are not both 0. For example, the processing module 502 may be configured to perform S403.

In a possible implementation, the at least one aggregation manner includes a first aggregation manner, the first aggregation manner indicates that the terminal supports joint data transmission on P2 first carriers and Q2 second carriers, P2 and Q2 are integers, and P2 and Q2 are not both zero.

In a possible implementation, alternatively, P2 is an integer greater than or equal to P1, and Q2 is an integer greater than or equal to Q1.

When the communication apparatus 50 is configured to implement the function of the terminal, for other functions that can be implemented by the communication apparatus 50, refer to related descriptions in the embodiment shown in FIG. 4. Details are not described again.

Alternatively, for example, the communication apparatus 50 is configured to implement a function of the radio access network node. The communication apparatus 50 is, for example, the radio access network node in the embodiment shown in FIG. 4.

The interface module 501 is configured to receive carrier aggregation capability information of the terminal. The carrier aggregation capability information indicates at least one aggregation manner of a first carrier and a second carrier. A bandwidth of the first carrier is less than or equal to a first bandwidth, a bandwidth of the second carrier is greater than or equal to a second bandwidth, and the second bandwidth is greater than or equal to the first bandwidth. For example, the interface module 501 may be configured to perform S401.

The interface module 501 is further configured to send carrier aggregation configuration information. The carrier aggregation configuration information is used to configure a first frequency domain resource. The first frequency domain resource includes frequency domain resources occupied by P1 first carriers and frequency domain resources occupied by Q1 second carriers. P1 and Q1 are obtained based on the carrier aggregation capability information, and P1 and Q1 are not both 0. For example, the interface module 501 may be configured to perform S402.

The processing module 502 is configured to communicate with the terminal on the first frequency domain resource. For example, the processing module 502 may be configured to perform S403.

In a possible implementation, the at least one aggregation manner includes a first aggregation manner and a second aggregation manner, the first aggregation manner indicates that the terminal supports joint data transmission on P2 first carriers and Q2 second carriers, P2 and Q2 are integers, and P2 and Q2 are not both zero.

In a possible implementation, P2 is an integer greater than or equal to P1, and Q2 is an integer greater than or equal to Q1.

When the communication apparatus 50 is configured to implement the function of the radio access network node, for other functions that can be implemented by the communication apparatus 50, refer to related descriptions in the embodiment shown in FIG. 4. Details are not described again.

In a simple embodiment, a person skilled in the art may figure out that the communication apparatus 50 may be in the form shown in FIG. 2. For example, the processor 201 in FIG. 2 may invoke the computer-executable instructions stored in the storage 203, to cause the communication apparatus 50 to perform the method in the foregoing embodiments.

For example, functions/implementation processes of the interface module 501 and the processing module 502 in FIG. 5 may be implemented by the processor 201 in FIG. 2 by invoking the computer-executable instructions stored in the storage 203. Alternatively, functions/implementation processes of the processing module 502 in FIG. 5 may be implemented by the processor 201 in FIG. 2 by invoking the computer-executable instructions stored in the storage 203, and functions/implementation processes of the interface module 501 in FIG. 5 may be implemented through the communication interface 204 in FIG. 2.

It may be understood that one or more of the foregoing modules or units may be implemented by using software, hardware, or a combination thereof. When any one of the foregoing modules or units is implemented by using software, the software exists in a form of computer program instructions, and is stored in the storage. The processor may be configured to execute the program instructions and implement the foregoing method procedures. The processor may be built into a SoC (system-on-a-chip) or an ASIC, or may be an independent semiconductor chip. In addition to a core for executing software instructions to perform operations or processing, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, this application further provides a chip system, including at least one processor and an interface. The at least one processor is coupled to a storage through the interface, and when the at least one processor executes a computer program or instructions in the storage, the method in any one of the foregoing method embodiments is performed. In a possible implementation, the chip system further includes the storage. Optionally, the chip system may include a chip, or may include a chip and another discrete component. This is not specifically limited in this application.

Optionally, this application further provides a computer-readable storage medium. All or a part of procedures in the foregoing method embodiments may be implemented by a computer program instructing related hardware. The program may be stored in the foregoing computer-readable storage medium. When the program is executed, the procedures in the foregoing method embodiments may be included. The computer-readable storage medium may be an internal storage unit of the communication apparatus in any one of the foregoing embodiments, for example, a hard disk or a memory of the communication apparatus. Alternatively, the computer-readable storage medium may be an external storage device of the communication apparatus, for example, a plug-in hard disk, a smart media card (smart media card, SMC), a secure digital (secure digital, SD) card, or a flash card (flash card) that is configured on the communication apparatus. Further, the computer-readable storage medium may include both an internal storage unit and an external storage device of the communication apparatus. The computer-readable storage medium is configured to store the computer program and store other programs and data that are required by the communication apparatus. The computer-readable storage medium may be further configured to temporarily store data that has been output or is to be output.

Optionally, this application further provides a computer program product. All or a part of the procedures in the foregoing method embodiments may be implemented by a computer program instructing related hardware. The program may be stored in the computer program product. When the program is executed, the procedures in the foregoing method embodiments may be included.

Optionally, this application further provides computer instructions. All or a part of the procedures in the foregoing method embodiments may be implemented by computer instructions instructing related hardware (for example, a computer, a processor, a terminal, or a radio access network node). The program may be stored in the computer-readable storage medium or the computer program product.

Optionally, this application further provides a communication system, including the terminal and the radio access network node in the embodiment shown in FIG. 3.

Optionally, this application further provides a communication system, including the terminal and the radio access network node in the embodiment shown in FIG. 4.

Based on the descriptions of the foregoing implementations, a person skilled in the art may clearly understand that, for the purpose of convenient and brief description, division of the foregoing functional modules is used only as an example for description. In actual application, the foregoing functions may be allocated to different functional modules for implementation as required, in other words, an inner structure of an apparatus is divided into different functional modules to implement all or a part of the functions described above.

In the several embodiments provided in this application, it should be understood that the disclosed apparatus and method may be implemented in other manners. For example, the described apparatus embodiment is merely an example. For example, division into the modules or the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. A part or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A configuration method, wherein the method comprises:
sending carrier aggregation capability information of a terminal, wherein the carrier aggregation capability information indicates that the terminal supports joint data transmission on N1 first carriers, a bandwidth of the first carrier is less than or equal to a first bandwidth, and N1 is an integer greater than 1;
receiving carrier aggregation configuration information, wherein the carrier aggregation configuration information is determined based on the carrier aggregation capability information, the carrier aggregation configuration information is used to configure a first frequency domain resource, the first frequency domain resource comprises frequency domain resources occupied by M2 second carriers, a bandwidth of the second carrier is greater than or equal to a second bandwidth, the second bandwidth is greater than or equal to the first bandwidth, and M2 is a positive integer; and
communicating with a radio access network node on the first frequency domain resource.

2. The method according to claim 1, wherein M2 is related to a first value, the first value is a ratio of a fourth bandwidth to a third bandwidth, the third bandwidth is determined based on the bandwidth of the second carrier, and the fourth bandwidth is determined based on the bandwidth of the first carrier; or the first value is configured by the radio access network node.

3. The method according to claim 2, wherein M2 is further related to a first factor of proportionality, wherein the first factor of proportionality is greater than 1, or the first factor of proportionality is greater than 0 and less than 1.

4. The method according to any one of claims 1 to 3, wherein the first frequency domain resource further comprises frequency domain resources occupied by N2 first carriers, and N2 is a positive integer.

5. The method according to claim 4, wherein N2 is related to the first value, the first value is the ratio of the fourth bandwidth to the third bandwidth, the third bandwidth is determined based on the bandwidth of the second carrier, and the fourth bandwidth is determined based on the bandwidth of the first carrier; or the first value is configured by the radio access network node.

6. The method according to claim 5, wherein N2 is further related to the first factor of proportionality, wherein the first factor of proportionality is greater than 1, or the first factor of proportionality is greater than 0 and less than 1.

7. The method according to claim 2, 3, 5, or 6, wherein the carrier aggregation capability information further indicates that the terminal supports joint data transmission on M1 second carriers, and M1 is an integer greater than 1.

8. The method according to claim 7, wherein
the third bandwidth is a bandwidth of a second carrier with a largest bandwidth in the M1 second carriers; and
the fourth bandwidth is a bandwidth of a first carrier with a largest bandwidth in the N1 first carriers.

9. The method according to claim 3 or 6, wherein the method further comprises:
sending first indication information, wherein the first indication information indicates the first factor of proportionality.

10. A configuration method, wherein the method comprises:
receiving carrier aggregation capability information of a terminal, wherein the carrier aggregation capability information indicates that the terminal supports joint data transmission on N1 first carriers, a bandwidth of the first carrier is less than or equal to a first bandwidth, and N1 is an integer greater than 1;
sending carrier aggregation configuration information, wherein the carrier aggregation configuration information is determined based on the carrier aggregation capability information, the carrier aggregation configuration information is used to configure a first frequency domain resource, the first frequency domain resource comprises frequency domain resources occupied by M2 second carriers, a bandwidth of the second carrier is greater than or equal to a second bandwidth, the second bandwidth is greater than or equal to the first bandwidth, and M2 is a positive integer; and
communicating with the terminal on the first frequency domain resource.

11. The method according to claim 10, wherein M2 is related to a first value, the first value is a ratio of a fourth bandwidth to a third bandwidth, the third bandwidth is determined based on the bandwidth of the second carrier, and the fourth bandwidth is determined based on the bandwidth of the first carrier; or the first value is configured by a radio access network node.

12. The method according to claim 11, wherein M2 is further related to a first factor of proportionality, wherein the first factor of proportionality is greater than 1, or the first factor of proportionality is greater than 0 and less than 1.

13. The method according to any one of claims 10 to 12, wherein the first frequency domain resource further comprises frequency domain resources occupied by N2 first carriers, and N2 is a positive integer.

14. The method according to claim 13, wherein N2 is related to the first value, the first value is the ratio of the fourth bandwidth to the third bandwidth, the third bandwidth is determined based on the bandwidth of the second carrier, and the fourth bandwidth is determined based on the bandwidth of the first carrier; or the first value is configured by the radio access network node.

15. The method according to claim 14, wherein N2 is further related to the first factor of proportionality, wherein the first factor of proportionality is greater than 1, or the first factor of proportionality is greater than 0 and less than 1.

16. The method according to claim 11, 12, 14, or 15, wherein the carrier aggregation capability information further indicates that the terminal supports joint data transmission on M1 second carriers, and M1 is an integer greater than 1.

17. The method according to claim 16, wherein
the third bandwidth is a bandwidth of a second carrier with a largest bandwidth in the M1 second carriers; and
the fourth bandwidth is a bandwidth of a first carrier with a largest bandwidth in the N1 first carriers.

18. The method according to claim 12 or 15, wherein the method further comprises:
receiving first indication information, wherein the first indication information indicates the first factor of proportionality.

19. A configuration method, wherein the method comprises:
sending carrier aggregation capability information of a terminal, wherein the carrier aggregation capability information indicates at least one aggregation manner of a first carrier and a second carrier, a bandwidth of the first carrier is less than or equal to a first bandwidth, a bandwidth of the second carrier is greater than or equal to a second bandwidth, and the second bandwidth is greater than or equal to the first bandwidth;
receiving carrier aggregation configuration information, wherein the carrier aggregation configuration information is used to configure a first frequency domain resource, the first frequency domain resource comprises frequency domain resources occupied by P1 first carriers and frequency domain resources occupied by Q1 second carriers, P1 and Q1 are obtained based on the carrier aggregation capability information, and P1 and Q1 are not both 0; and
communicating with a radio access network node on the first frequency domain resource.

20. The method according to claim 19, wherein the at least one aggregation manner comprises a first aggregation manner, the first aggregation manner indicates that the terminal supports joint data transmission on P2 first carriers and Q2 second carriers, P2 and Q2 are integers, and P2 and Q2 are not both zero.

21. The method according to claim 20, wherein P2 is an integer greater than or equal to P1, and Q2 is an integer greater than or equal to Q1.

22. A configuration method, wherein the method comprises:
receiving carrier aggregation capability information of a terminal, wherein the carrier aggregation capability information indicates at least one aggregation manner of a first carrier and a second carrier, a bandwidth of the first carrier is less than or equal to a first bandwidth, a bandwidth of the second carrier is greater than or equal to a second bandwidth, and the second bandwidth is greater than or equal to the first bandwidth;
sending carrier aggregation configuration information, wherein the carrier aggregation configuration information is used to configure a first frequency domain resource, the first frequency domain resource comprises frequency domain resources occupied by P1 first carriers and frequency domain resources occupied by Q1 second carriers, P1 and Q1 are obtained based on the carrier aggregation capability information, and P1 and Q1 are not both 0; and
communicating with the terminal on the first frequency domain resource.

23. The method according to claim 22, wherein the at least one aggregation manner comprises a first aggregation manner, the first aggregation manner indicates that the terminal supports joint data transmission on P2 first carriers and Q2 second carriers, P2 and Q2 are integers, and P2 and Q2 are not both zero.

24. The method according to claim 23, wherein P2 is an integer greater than or equal to P1, and Q2 is an integer greater than or equal to Q1.

25. A communication apparatus, comprising a unit or a module configured to perform the method according to any one of claims 1 to 9, comprising a unit or a module configured to perform the method according to any one of claims 10 to 18, comprising a unit or a module configured to perform the method according to any one of claims 19 to 21, or comprising a unit or a module configured to perform the method according to any one of claims 22 to 24.

26. A communication apparatus, comprising a processor, wherein the processor is coupled to a storage, the storage is configured to store a program or instructions, and when the program or the instructions are executed by the processor, the apparatus is caused to perform the method according to any one of claims 1 to 9, perform the method according to any one of claims 10 to 18, perform the method according to any one of claims 19 to 21, or perform the method according to any one of claims 22 to 24.

27. A computer-readable storage medium, storing a computer program or instructions, wherein when the computer program or the instructions are executed, a computer is caused to perform the method according to any one of claims 1 to 9, the method according to any one of claims 10 to 18, the method according to any one of claims 19 to 21, or the method according to any one of claims 22 to 24.

28. A computer program product, wherein the computer program product comprises computer program code, and when the computer program code is run on a computer, the computer is caused to implement the method according to any one of claims 1 to 9, implement the method according to any one of claims 10 to 18, implement the method according to any one of claims 19 to 21, or implement the method according to any one of claims 22 to 24.
